# EUROPEAN PATENT SPECIFICATION

(11) **EP 2 167 951 B1**
(45) Date of publication and mention of the grant of the patent: **26.09.2012**
(21) Application number: 08774195.5
(22) Date of filing: 20.06.2008
(51) Int. Cl.: G01N 27/447

(54) **FFE method using a separation medium with a volatile buffer**
FFE-Verfahren unter Verwendung eines Trennmediums mit flüchtigem Puffer
Procédé d'électrophorèse à écoulement libre utilisant un milieu de séparation avec un tampon volatil

(30) Priority: 20.06.2007 US 945246 P; 12.11.2007 US 987208 P; 29.04.2008 US 48777
(43) Date of publication of application: 31.03.2010
(73) Proprietor: Becton, Dickinson and Company, Franklin Lakes, NJ 07417-1180 (US)
(72) Inventor: WEBER, Gerhard, 85551 Kirchheim-Heimstetten (DE); NISSUM, Mikkel, 85586 Poing (DE)
(74) Representative: Eder, Michael
(86) International application number: PCT/EP2008/057905
(87) International publication number: WO 2008/155420

(56) References cited:
- US-A1- 2007 051 626
- BIER F F ET AL: "Determination of the electrophoretic mobility of chromosomes by free flow electrophoresis. I. Morphology and stability." ELECTROPHORESIS OCT 1989, vol. 10, no. 10, October 1989 (1989-10), pages 690-697, XP007906041 ISSN: 0173-0835
- NATH S ET AL: "Correlation of migration behavior in free-flow zone electrophoresis and electrophoretic titration curve." ELECTROPHORESIS AUG 1990, vol. 11, no. 8, August 1990 (1990-08), pages 612-616, XP007906039 ISSN: 0173-0835
- ROMAN M C ET AL: "FREE-FLOW ELECTROPHORESIS" ANALYTICAL CHEMISTRY, AMERICAN CHEMICAL SOCIETY. COLUMBUS, US, vol. 66, no. 2, 15 January 1994 (1994-01-15), pages 86A-94A, XP000429642 ISSN: 0003-2700
- NATH S ET AL: "Separation of enzymes from microorganism crude extracts by free-flow zone electrophoresis", BIOTECHNOLOGY AND BIOENGINEERING, WILEY & SONS, HOBOKEN, NJ, US, vol. 51, no. 1, 5 July 1996 (1996-07-05), pages 15-22, XP007913452, ISSN: 0006-3592

## Description

### Field of the Invention

The present invention generally relates to the use of separation media comprising a volatile buffer system in free flow electrophoresis (FFE). The separation media provided herein allow a convenient separation of the analytes by electrophoresis, and offer the further advantage that the buffer compounds and the solvent can be easily and residue-free removed by evaporation after the electrophoretic separation step. More specifically, methods for mass spectrometric analysis of analytes comprising an FFE separation step employing said separation media are provided by the present invention.

### Background of the Invention

Electrophoresis is a well-established technology for separating particles based on the migration of charged particles under the influence of a direct electric current. Several different operation modes such as isoelectric focusing (IEF), zone electrophoresis (ZE) and isotachophoresis (ITP) have been developed as variants of the above separation principle and are generally known to those of skill in the art.

IEF is a technique commonly employed, e.g., in protein characterization as a mechanism to determine a protein's isoelectric point (see e.g., Analytical Biochemistry, Addison Wesley Longman Limited-Third Edition, 1998), whereas ZE is based on the difference between the electrophoretic mobility value of the particles to be separated and the charged species of the separation medium employed.

The above general operation modes can be applied to several different electrophoretic technologies such as in electrophoresis on a solid support (*e.g.* filter paper, cellulose acetate, agarose, etc.), capillary electrophoresis and free flow electrophoresis (FFE).

Among electrophoretic technologies, FFE is one of the most promising [Krivanova L. & Bocek P. (1998), "Continuous free-flow electrophoresis", Electrophoresis 19: 1064-1074]. FFE is a technology wherein the separation of the analytes occurs in liquid medium in the absence of a stationary phase (or solid support material) to minimize sample loss by adsorption. FFE is often referred to as carrier-less deflection electrophoresis or matrix-free deflection electrophoresis.

In the field of proteomics, FFE is the technology of choice for the defined pre-separation of complex protein samples in terms of their varying isoelectric point (pI) values. Using FFE, organic and inorganic molecules, bioparticles, biopolymers and biomolecules can be separated on the basis of their electrophoretic mobility. The corresponding principles have already been described [e.g. Bondy B. et al. (1995), "Sodium chloride in separation medium enhances cell compatibility of free-flow electrophoresis", Electrophoresis 16: 92-97].

The process of FFE has been improved, e.g., by way of stabilization media and counter-flow media. This is reflected, for example, in U.S. Patent 5,275,706. According to this patent, a counter-flow medium is introduced into the separation space counter to the continuous flow direction of the bulk separation medium and sample that travels between the electrodes. Both media (separation media and counter flow media) are discharged or eluted through fractionation outlets, typically into a micro titer plate, resulting in a fractionation process having a low void volume. Additionally, a laminar flow of the media in the region of the fractionation outlets is maintained (i.e., with very low or no turbulence).

A particular FFE technique referred to as interval FFE is disclosed, for example, in U.S. Patent 6,328,868. In this patent, the sample and separation medium are both introduced into an electrophoresis chamber, and the analytes in the sample are separated using an electrophoresis mode such as ZE, IEF or ITP, and are finally expelled from the chamber through fractionation outlets. Embodiments of the '868 patent describe the separation media and sample movement to be unidirectional, traveling from the inlet end towards the outlet end of the chamber, with an effective voltage applied causing electrophoretic migration to occur while the sample and media are not being fluidically driven from the inlet end towards the outlet end, in contrast to the technique commonly used in the art wherein the sample and media pass through the apparatus while being separated in an electrical field (continuous FFE).

The so-called cyclic mode or cyclic interval mode in the context of FFE as used herein has been described in WO 2008/025806. In sum, the cyclic interval mode is characterized by at least one, and possible multiple reversals of the bulk flow direction while the sample is being kept in the electrophoretic field between the elongated electrodes. In contrast to the static interval mode, the sample is constantly in motion thereby allowing higher field strength and thus better (or faster) separation. Additionally, by reversing the bulk flow of the sample between the elongated electrodes, the residence time of the analytes in the electrical field can be increased considerably, thereby offering increased separation time and/or higher separation efficiency and better resolution. The reversal of the bulk flow into either direction parallel to the elongated electrodes (termed a cycle) can be repeated for as often as needed in the specific situation, although practical reasons and the desire to obtain a separation in a short time will typically limit the number of cycles carried out in this mode.

International patent application WO 02/50524 discloses an electrophoresis method employing an apparatus with a separation chamber through which the separation medium flows and which provides a separation space defined by a floor and a cover and spacers separating these two from each other. In addition, this FFE apparatus encompasses a pump for supplying the separation medium, which enters the separation chamber via medium feed lines, and leaves the chamber via outlets. The FFE apparatus also includes electrodes for applying an electric field within the separation medium and sample injection points for adding the mixture of particles or analytes and fractionation points for removing the particles separated by FFE in the separation medium. The separated particles can be used for analytic purposes or for further preparative processing. In any case, the application does not disclose any separation media.

A number of separation media for the separation of analytes such as bioparticles and biopolymers are known in the art. For example, the book "Free-flow Electrophoresis", published by K. Hannig and K. H. Heidrich, (ISBN 3-921956-88-9) reports a list of separation media suitable for FFE and in particular for free flow ZE (FF-ZE). U.S. Patent 5,447,612 (to Bier et al.) discloses another separation medium, which is a pH buffering system for separating analytes by IEF by forming functionally stable pre-cast narrow pH zone gradients in free solution. It employs buffering components in complementary buffer pairs. The buffers components are selected from among simple chemically defined ampholytes, weak acids and weak bases, and are paired together on the basis of their dissociation characteristics so as to provide a rather flat pH gradient of between 0.4 to 1.25 pH units. Bier et al., Electrophoresis, Vol. 10(10) (1989), pages 690-697 report on a variety of FFE separations of chromosomes employing, *inter alia,* TRIS/ acetic acid as the buffer components of the separation medium. Nath et al., Biotechnology and Bioengineering, Vol. 51(1) (1996), pages 15-22 also describe a FFE separation with TRIS/acetic acid as the buffer medium and a subsequent analysis of a fraction obtained from the FFE separation by UV/VIS spectroscopy.

Mass spectrometric (MS) analysis is a powerful analytical technique that is used to identify unknown compounds, to quantify known compounds, and to elucidate the structure and chemical properties of molecules. It is an important emerging analytical method for the characterization of inorganic and organic molecules and especially of bioparticles, biopolymers and biomolecules. Two primary methods for ionization of biological molecules such as proteins or polysaccharides exist: electro spray ionization (ESI) and matrix-assisted-laser-desorption/ionization (MALDI). To provide a sample ready to be used for a MALDI analysis, a sample to be analyzed is mixed with a matrix after optional preceding steps such as a fragmentation of an analyte (*e.g.*, digestion) or the removal of disturbing compounds, and is allowed to dry prior to insertion into the mass spectrometer.

There are several potential problems that must be resolved in order to successfully carry out a mass spectrometric analysis of a compound of interest, particularly of biomolecules such as proteins. Proteins or other biological molecules of interest to researchers are usually part of a very complex mixture of other proteins and molecules that co-exist in a biological medium. This presents several significant problems. First, the two 4 ionization techniques used for large molecules usually only work well when the mixture contains roughly equal amounts of constituents, while in samples of biological origin, different proteins or molecules tend to be present in widely differing amounts. If such a mixture is ionized using ESI or MALDI, the more abundant species have a tendency to "drown" signals from less abundant ones. The second problem is that the mass spectrum from a complex mixture is very difficult to interpret due to the overwhelming number of mixture components. This is exacerbated, e.g., by the fact that enzymatic digestion of a protein gives rise to a large number of peptide products. Additionally, many substances (*e.g.*, inorganic salts) which are commonly present in samples comprising biomolecules are non-volatile under mass spectrometric working conditions or interfere with the ionization process during mass spectrometric measurements and, therefore, suspend signals of the analytes.

In fact, one of the major barriers to widely applicable MS analysis of biological samples is the successful purification or at least substantial enrichment of the molecules of interest to make them suitable for analysis by MS. Even the most sophisticated, sensitive instrument cannot generate useful data from impure and/or inadequate amounts of the molecule to be analyzed. Unfortunately, most biomolecules of interest are found only in very low abundance. Therefore, sample preparation is one critical, and often technically challenging task in a successful biomolecule MS analysis project today. In order to contend with this problem, methods to fractionate and enrich substances are normally used before mass spectrometric analysis.

Although electrophoresis is a powerful technique for the separation or fractionation of substances, there are some drawbacks using conventional electrophoresis to separate analytes regarding a subsequent MS analysis of the separated analytes.

As is well known in the art, ionic buffer compounds, salts and detergents have to be removed before MS analysis. In fact, many inorganic ions (*e.g.* metal ions or halogenide ions), which are commonly present in buffer systems for electrophoresis, suppress the mass spectrometric signal, interfere with the ionization process and form adducts to many compounds. Accordingly, the samples to be analyzed by MS have to be subjected to procedures that are time-consuming and potentially lead to loss of analyte material. Among those procedures are, for example, liquid extraction (Davidsson P. et al., (1999) Anal. Chem., 71, 642-647), ion pair reagents (Königsberg, WH and Henderson, L.; (1983) Meth. Enzymol., 91, 254-259), or precipitation of proteins with guanidinium chloride (Chirgwin, J. M. et al., (1979) Biochemistry 18, 5294-5299.).

In view of the above, it becomes readily apparent that there is a need in the art for powerful and convenient separation or fractionation techniques, particularly for inorganic, organic or samples of biological origin, that are capable of purifying or at least substantially enriching the analyte(s) of interest prior to their analysis by, e.g., mass spectrometry, but which avoid the drawbacks of the previously known methods in the art.

### Summary of the Invention

It is thus an object of embodiments of the present invention to provide methods that allow the convenient and reproducible separation/fractionation of molecules of interest and allow the separated or at least enriched sample to be subjected to subsequent analysis without having to resort to time- and sample-consuming sample preparation steps prior to the subsequent analysis by mass spectroscopy.

It is a further object of embodiments of the present invention to provide matrix-free media systems for use in FFE separation methods which are advantageous over commonly used FFE media systems since the potentially disturbing buffer compounds (*e.g.*, inorganic salts) can either be easily removed or do not interfere with the subsequent analysis of a separated analyte of interest by mass spectrometry.

The inventors have surprisingly found that separation media comprising volatile buffer compounds are suitable for preparative and analytic FFE separations and allow the successful separation or fractionation of analytes, thereby yielding substantially purified or enriched samples that can be conveniently used in downstream MS without requiring time-consuming sample preparation steps (e.g., desalting). The present invention provides a method for analyzing analytes comprising a separation of analytes by free flow electrophoresis (FFE) comprising said aqueous separation medium and a subsequent downstream analysis of at least one analyte of interest obtained from said FFE separation step, wherein said downstream analysis is mass spectrometric analysis selected from electrospray ionization (ESI), surface-enhanced laser desorption / ionization (SELDI), matrix-assisted laser desorption/ionization (MALDI or MALDI-TOF-MS(/MS)), or LC-MS(/MS). The FFE separation media used in said method comprise at least one buffer acid and at least one buffer base, wherein each of the buffer acids and buffer bases are volatile. After collecting the analytes of interest from the FFE separation step, and, optionally, a potential digestion of proteins (in proteomics applications) or of DNA-containing samples, the volatile buffer compounds and the solvent can be removed easily and residue-free to provide either a pure analyte or a sample comprising the analyte(s) that is ready to use for further analysis such as mass spectrometric analysis.

The separation media described herein, are particularly suitable for, e.g., free flow ZE (FF-ZE) and, more preferably, free flow IEF (FF-IEF), although it will be apparent to those of skilled in the art that the separation media provided herein may in principle be used also in other applications such as carrier-based electrophoresis.

The pH profile of the separation medium in the separation chamber during electrophoresis may be non-linear; *i.e.,* there will be one or more pH steps and/or plateaus within the separation space between the anode and the cathode of an FFE apparatus. Such media are particularly useful in FFE applications operated in IEF mode.

Alternatively, the pH profile exhibited by the separation medium may be essentially linear (i.e., without any major pH steps during electrophoretic separation), or even essentially constant (i.e. a "flat" pH profile, or a rather gentle pH gradient within the separation chamber).

The separation media may comprise only one buffer acid and one buffer base. In other words, such separation media represent binary separation media (so-called A/B media) wherein one acid function of a volatile compound and one base function of another or of the same volatile compound essentially serve to establish a separation medium with the desired pH and conductivity profile. While good results may also be achieved with two or more buffer acids and buffer bases in the separation medium, it is typically advantageous to use as few components as possible, not only because such media are cheaper to prepare and possibly easier to use, but also because the electrochemical properties of the medium will become more complex if the number of charged species present in the separation chamber is increased.

### Brief Description of the Drawings

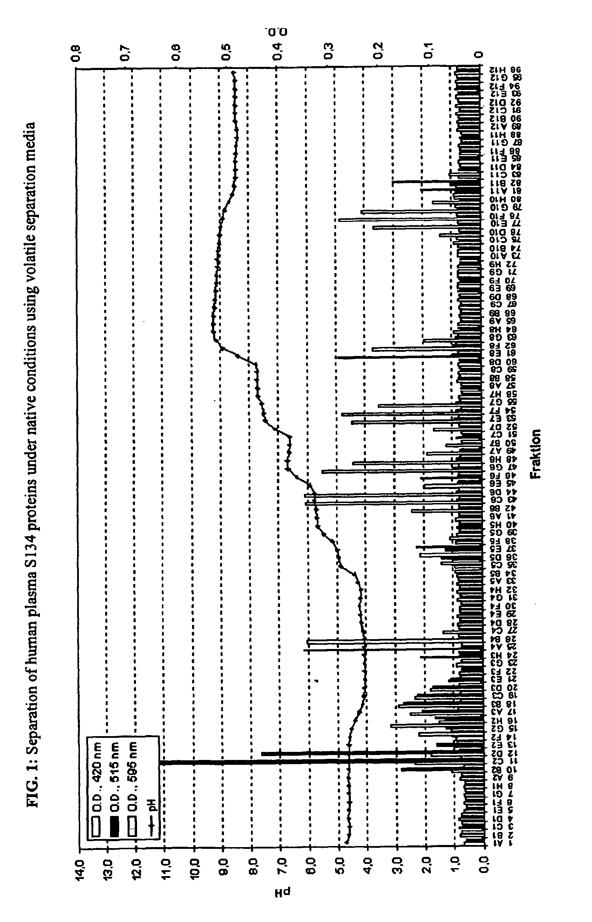

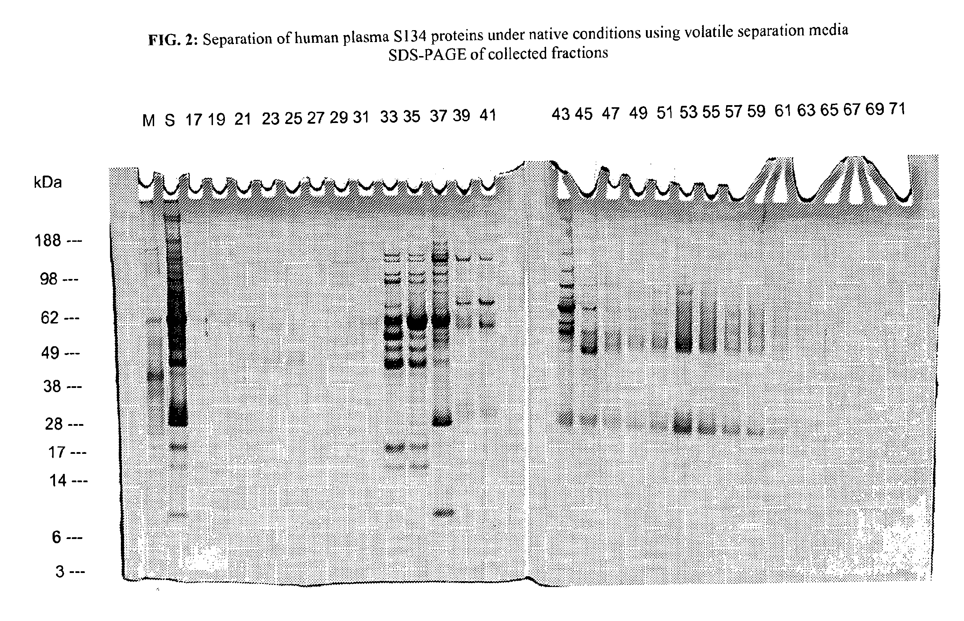

**FIGs. 1** and **2** illustrate the results of a FFE separation of human plasma proteins operated in continuous IEF electrophoresis mode (FF-IEF) as described in Example 1 below.

**FIG. 1** shows the fractional separation of the sample between anode (left) and cathode (right) (96 fractions collected in a 96-well standard microtiter plate) and indicates the pH of the fractions. Colored pI-markers were separated to evaluate the separation performance of the system. The absorbance of each fraction at λ=420nm, 515nm and 595nm which represent the absorbance of the respective pI-markers are also reported in FIG. 1.

**FIG. 2** depicts the corresponding SDS-PAGE gel obtained for the various fractions indicating the presence of fractionated analytes in the sample.

**FIGs. 3** and **4** illustrate the results of another FFE separation depleting human serum albumin from a sample of human plasma proteins operated in continuous IEF electrophoresis mode (FF-IEF) as described in Example 2 below.

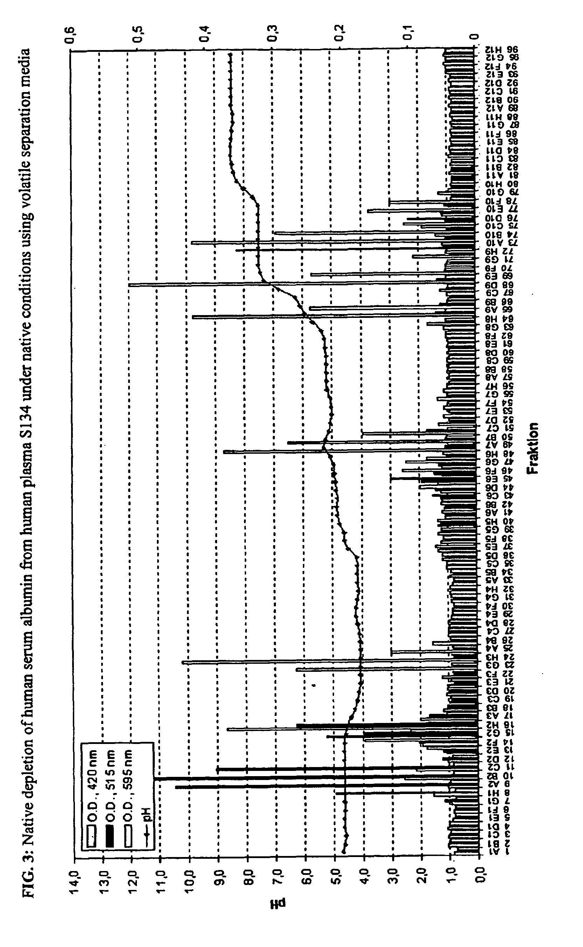

**FIG. 3** shows the fractional separation of the sample between anode (left) and cathode (right) (96 fractions collected in a 96-well standard microtiter plate) and indicates the pH of the fractions. Colored pI-markers were separated to evaluate the separation performance of the system. The absorbance of each fraction at λ=420nm, 515nm and 595nm which represent the absorbance of the respective pI-markers are also reported in FIG. 3.

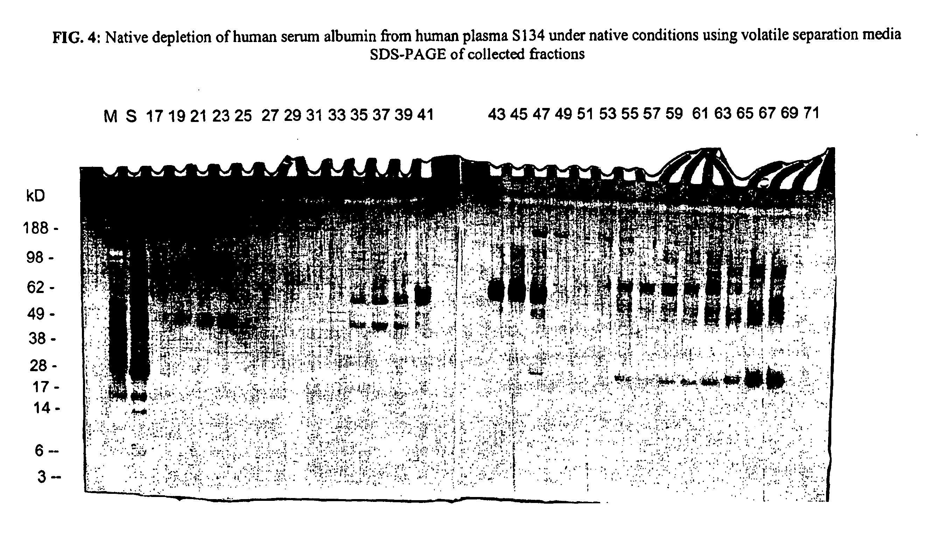

**FIG. 4** shows the corresponding SDS-PAGE gel obtained for the various fractions demonstrating the depletion capabilities for human serum albumin.

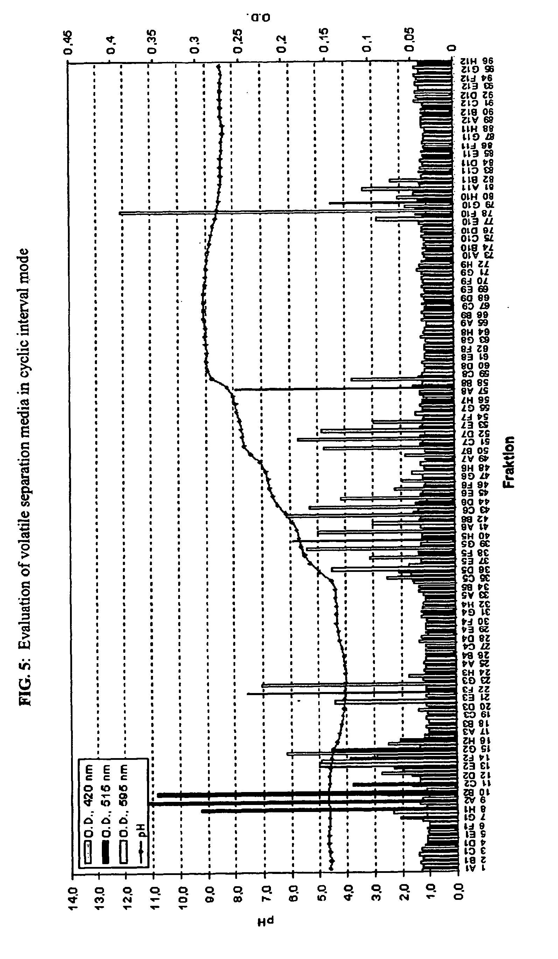

**FIG. 5** illustrates the results of a FFE separation operated in cyclic interval IEF electrophoresis mode (cyclic FF-IEF) as described in Example 3 below. It shows the fractional separation of the sample between anode (left) and cathode (right) (96 fractions collected in a 96-well standard microtiter plate) and indicates the pH of the fractions Colored pI-markers were separated to evaluate the separation performance of the system. The absorbance of each fraction at λ=420nm, 515nm and 595nm which represent the absorbance of the respective pI-markers are also reported in FIG. 5.

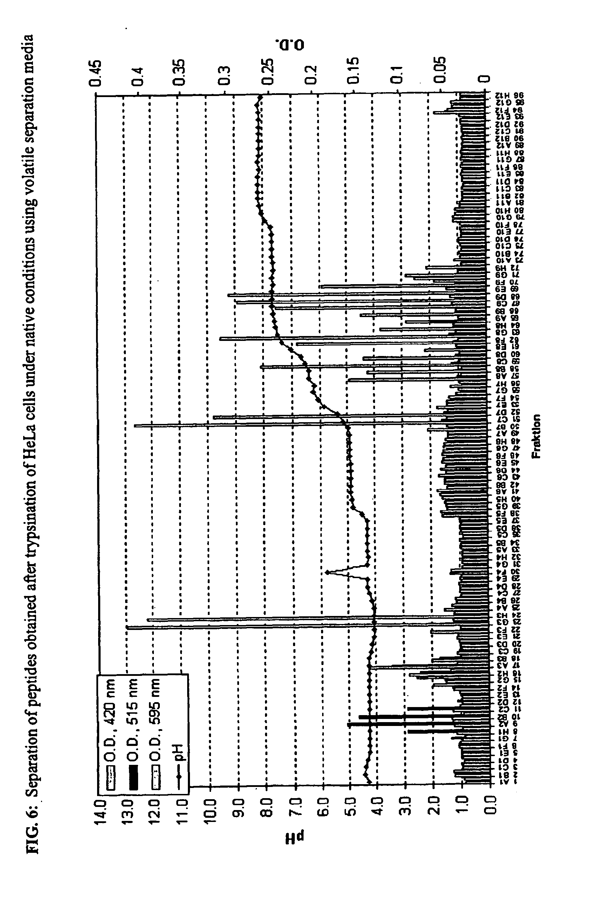

**FIG. 6** illustrates the results of another FFE separation of peptides obtained after trypsination of HeLa cells operated in continuous IEF electrophoresis mode (FF-IEF) as further described in Example 4 below. It depicts the fractional separation of the sample between anode (left) and cathode (right) (96 fractions collected in a 96-well standard microtiter plate) and indicates the pH of the fractions. Colored pI-markers were separated to evaluate the separation performance of the system. The absorbance of each fraction at λ=420nm, 515nm and 595nm which represent the absorbance of the respective pI-markers are also reported in FIG. 6.

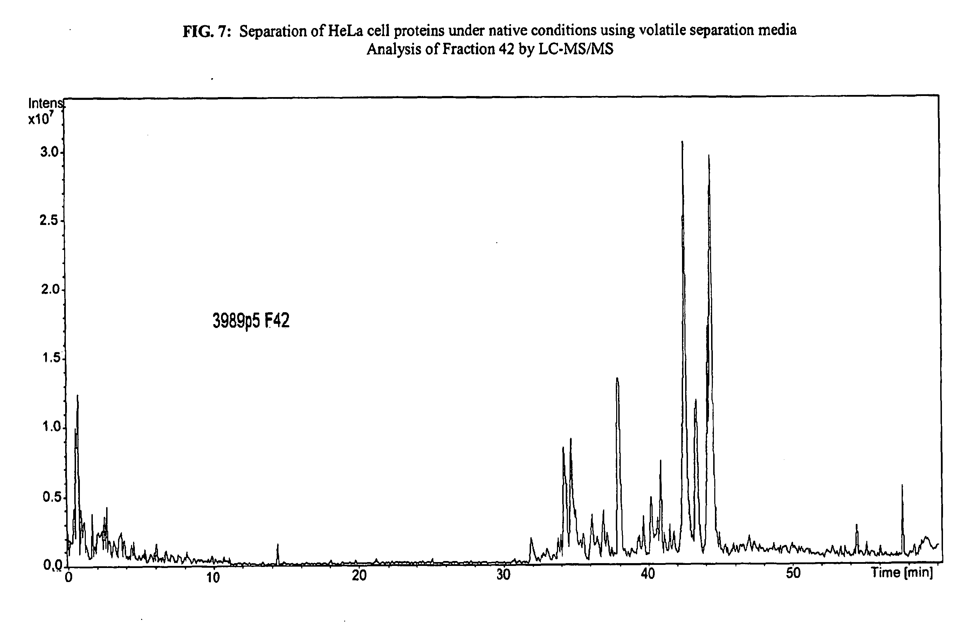

**FIG. 7** shows a Base Peak Chromatogram recorded from a sample of fraction 42 of the experiment described in Example 4. The recovered fraction was directly subjected to LC-MS/MS analysis without any additional sample preparation step.

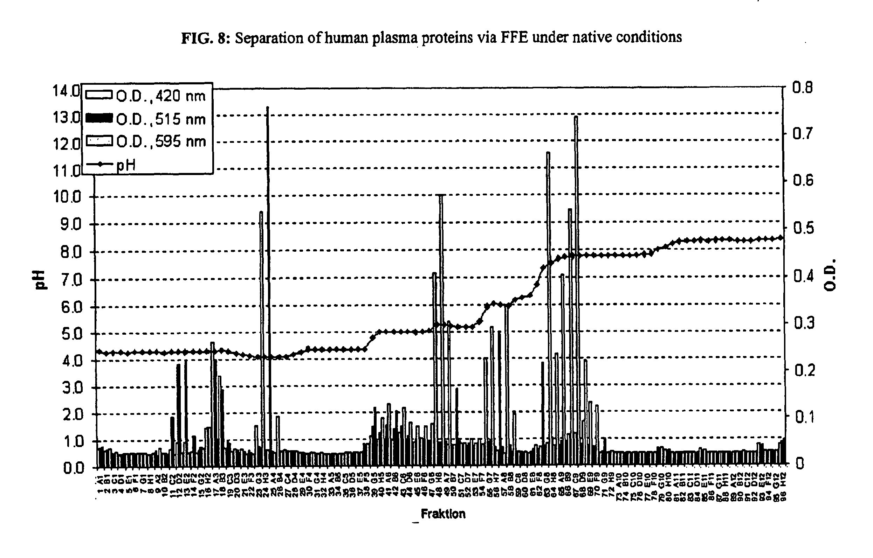

**FIGs. 8** to **10** illustrate the results of another FFE separation of a sample containing human plasma proteins operated in continuous IEF electrophoresis mode (FF-IEF) followed by SDS-PAGE analysis and subsequent MALDI-TOF mass spectrometric analysis of a recovered fraction as described in more detail in Example 5 below.

**FIG. 8** depicts the fractional separation of the sample between anode (left) and cathode (right) (96 fractions collected in a 96-well standard microtiter plate) and indicates the pH of the fractions. Colored pI-markers were separated to evaluate the separation performance of the system. The absorbance of each fraction at λ=420nm, 515nm and 595nm which represent the absorbance of the respective pI-markers are also reported in FIG. 8.

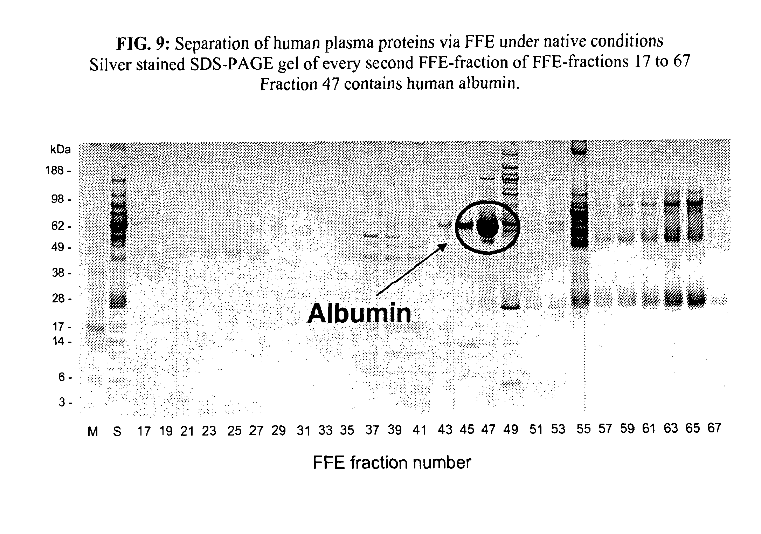

**FIG. 9** shows the corresponding SDS-PAGE gel obtained for the various fractions.

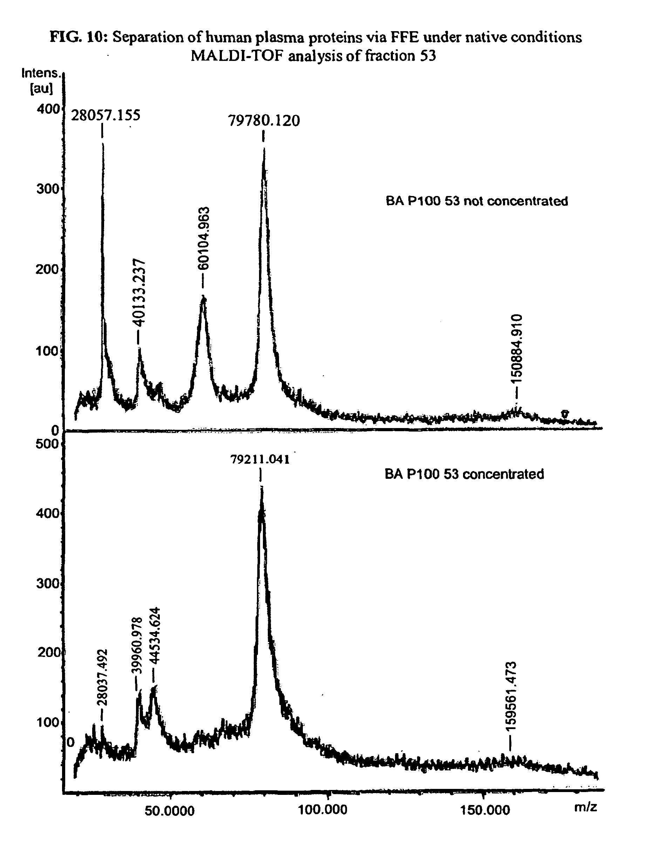

**FIG. 10** shows a Base Peak Chromatogram recorded from a sample of fraction 53 of the experiment described in Example 5. The recovered fraction was directly subjected to MALDI-TOF analysis without any additional desalting step.

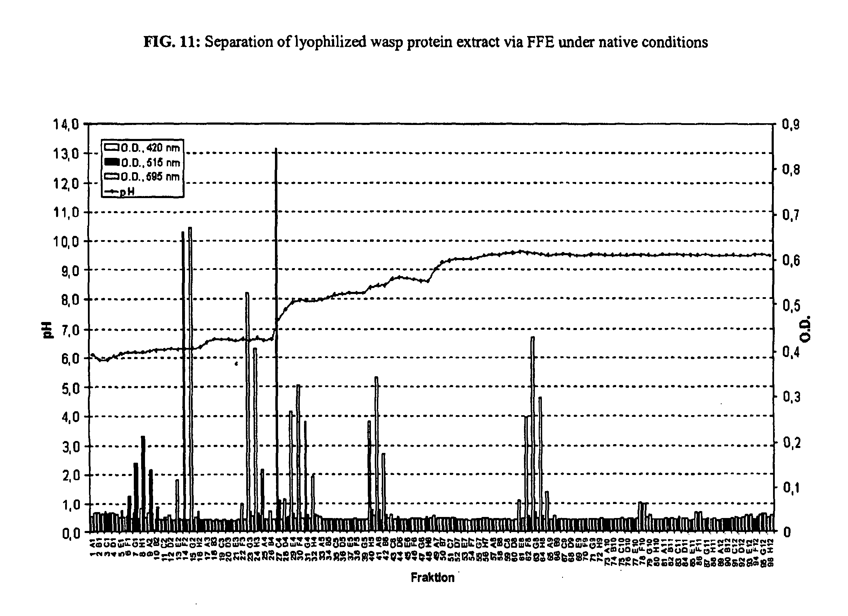

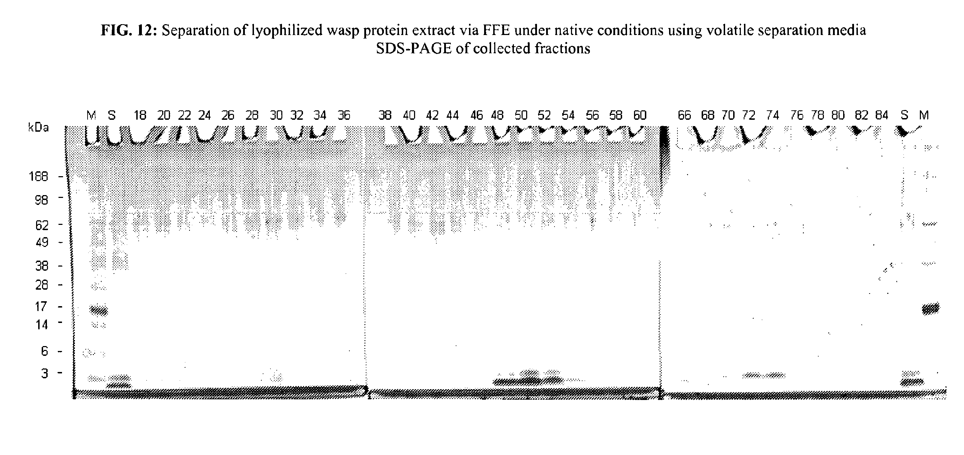

**FIGs. 11** and **12** illustrate the results of another FFE separation of lyophilized wasp protein extract operated in continuous IEF electrophoresis mode (FF-IEF) and using a different volatile buffer system as further described in Example 6 below.

**FIG. 11** shows the fractional separation of the sample between anode (left) and cathode (right) (96 fractions collected in a 96-well standard microtiter plate) and indicates the pH of the fractions. Colored pI-markers were separated to evaluate the separation performance of the system. The absorbance of each fraction at λ=420nm, 515nm and 595nm which represent the absorbance of the respective pI-markers are also reported in FIG. 11.

**FIG. 12** shows the corresponding SDS-PAGE gel obtained for the various fractions recovered after the FFE separation.

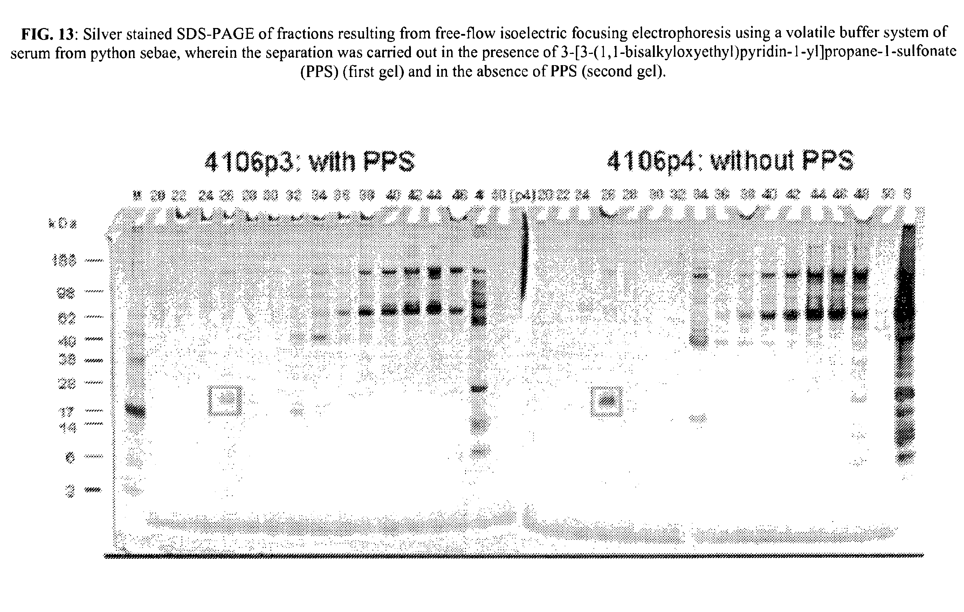

**FIG. 13** shows two silver stained SDS-PAGE of fractions resulting from free-flow isoelectric focusing electrophoresis using a volatile buffer system of serum from python sebae, wherein the separation was carried out in the presence of 3-[3-(1,1-bisalkyloxyethyl)pyridin-1-yl]propane-1-sulfonate (PPS) (first gel) and in the absence of PPS (second gel).

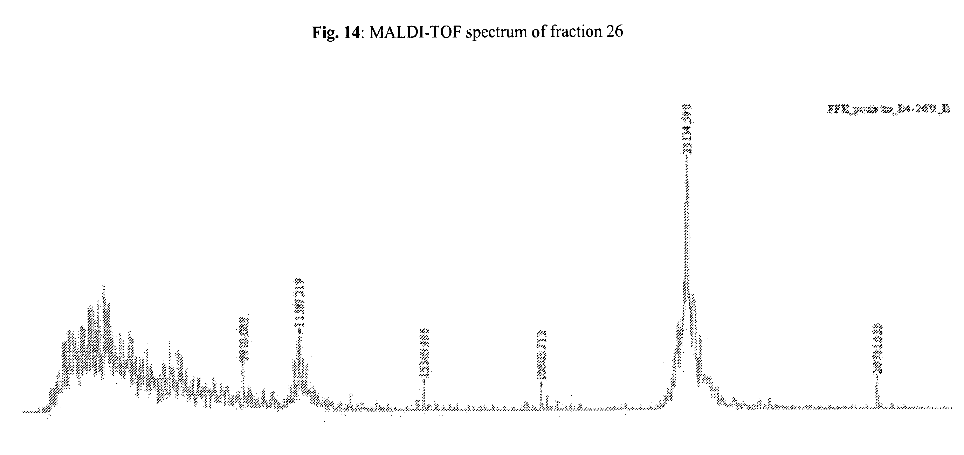

**FIG. 14** shows the MALDI-TOF spectrum of a 25 kDa protein isolated in fraction 26 of a free flow electrophoresis step in the presence of a volatile buffer system and the cleavable detergent PPS.

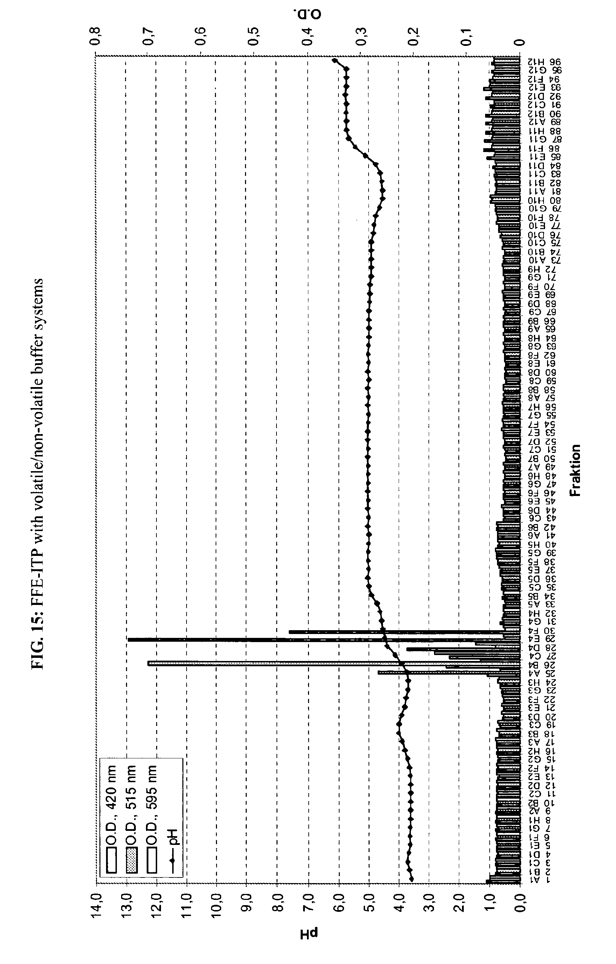

**FIG. 15** depicts the fractional separation of the sample between anode (left) and cathode (right) (96 fractions collected in a 96-well standard microtiter plate) and indicates the pH of the fractions. Colored pI-markers were separated to evaluate the separation performance of the system. The absorbance of each fraction at λ=420nm, 515nm and 595nm which represent the absorbance of the respective pI-markers are also reported in FIG. 15.

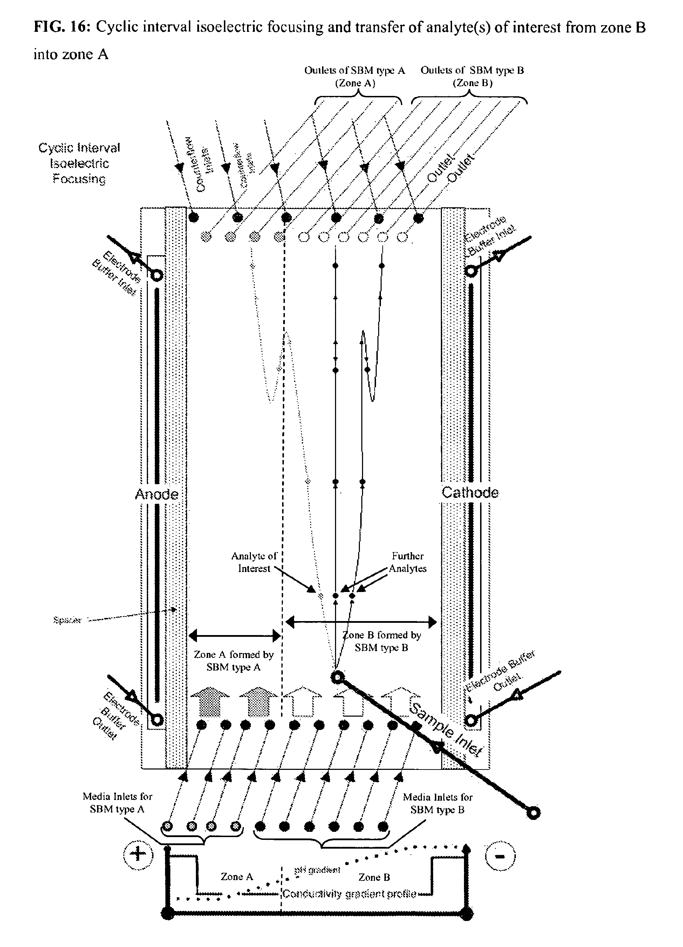

**FIG. 16** shows a non-limiting example to illustrate the principle of a method wherein a separation zone comprises a zone A formed by separation buffer media (SBM) comprising a volatile buffer system (SBM type A) and a zone B formed by SBM comprising a non-volatile buffer system (SBM type B). The method illustrated in FIG. 16 is cyclic interval isoelectric focusing wherein the sample is introduced into zone B and acidic analytes of interest elute in a SBM type A. Optionally, a sample could be introduced into zone A as well.

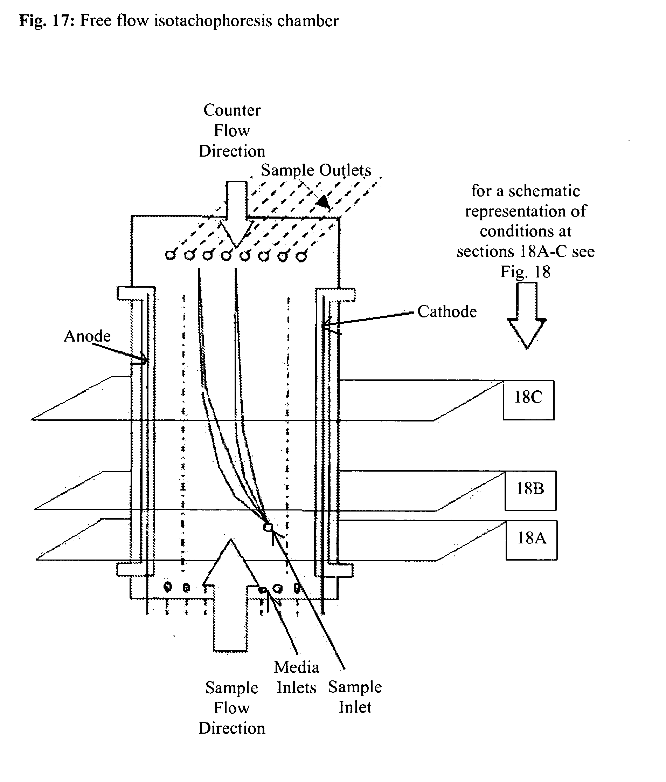

**FIG. 17** shows a schematic free flow isotachophoretic (FF ITP) separation carried out in an exemplary FFE separation chamber.

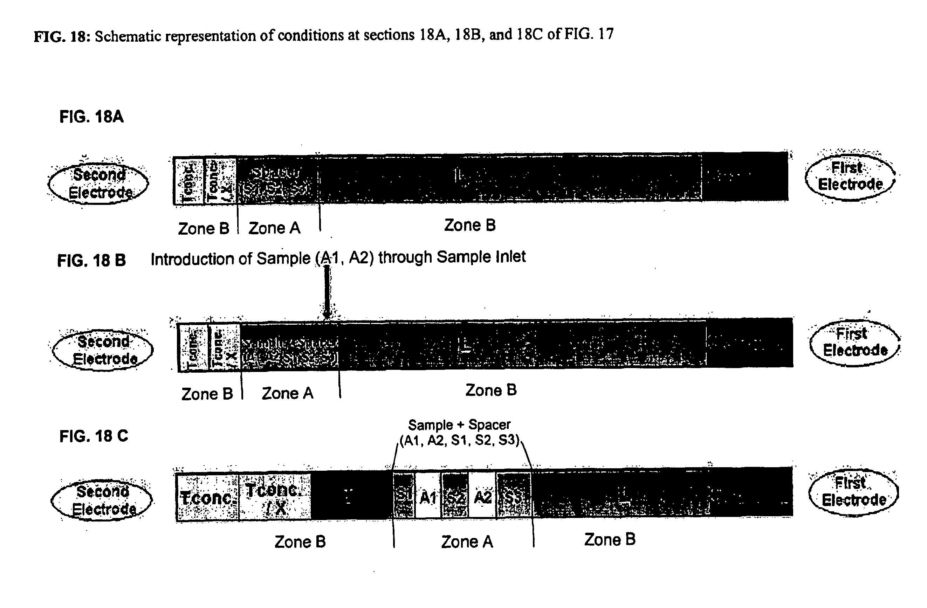

**FIGs. 18a to 18c** represent a schematic representation of conditions at sections 18A, 18B, and 18C as indicated in FIG. 17. The Sample is introduced into the spacer region which is formed by a SBM type A, i.e. into a zone A. The concentrated terminator electrolyte T zone and the diluted T zone form a first zone B, and the L stabilizing zone and leader electrolyte zone form a second zone B.

Section 18A (FIG. 18a): Initial starting conditions showing the introduced electrolytes and spacer electrolytes. Between a first (right side) electrode and a second (left side) electrode, the separation space contains a L stabilizing zone (conc. L.), a leader electrolyte (L) zone, a spacer electrolyte (S) zone (comprising spacer ions S1, S2, and S3), a concentrated terminator electrolyte T zone (T conc.) and a diluted T zone (T conc./X) that has been diluted by a factor X as described herein.

Section 18B (FIG. 18b): Conditions showing the separation space once the sample has been added into the flow of the electrolytes as depicted in Fig. 4a. At this point the sample introduction port (14) is positioned between the first and second electrodes and the sample including sample ions S1 and S2 is introduced into the separation media. At section B, an electric field may be already have been established, or the electric field will be established shortly thereafter while the sample is located between sections B and C.

Section 18C (FIG. 18c): Condition representing the movement and stacking effect of isotachophoresis generated from an electric field applied between the first and second electrode. The condition is formed by the proper selection and positioning of L, sample ions (A1 and A2), spacer ions (S1, S2, and S3), T conc., T conc./X and T_{s dil} (strongly diluted) as defined above. A terminator electrolyte T_{s dil} zone is formed wherein the concentration of the terminator T in the T_{s dil} zone is even less than the concentration of T conc./X in the T conc/X zone. The concentration of terminator electrolyte zone T is determined by the concentration of leader and sample electrolyte zones through the Kohlrausch equation.

### Detailed Description of the Invention

The present invention provides a method for analyzing, identifying and quantifying analytes via mass spectrometry comprising an FFE step comprising volatile separation media.

The present separation media comprising volatile buffer compounds have advantageous properties since they allow on the one hand a reliable and reproducible separation or fractionation of analytes by FFE, and offer on the other hand the additional advantage that the volatile buffer system (solvent and buffer compounds) can be conveniently removed without leaving behind unwanted components ("residue-free removal") that are incompatible with downstream analysis methods by mass spectrometry. In other words, the FFE separation step employing the volatile separation media according to the present invention yields sample fractions that can be directly (*i*.*e*., without washing steps or buffer exchange steps, etc.) used in subsequent analyses which are chosen from not limited to MS, MALDI MS, ESI MS, SELDI MS, LC-MS(/MS), MALDI-TOF-MS(/MS).

As will be apparent from the Examples discussed herein below, the separation media may be easily made, are generally non-hazardous and yield stable and reproducible electrophoretic conditions allowing for a powerful and sensitive separation of analytes in a sample by means of FFE.

As used herein, the term "sample" refers to any composition whereof at least a part is subjected to a free-flow electrophoretic separation and/or analysis. Typically, a sample comprises, or is suspected of comprising, at least one analyte of interest.

A "separation zone" as used herein should be understood to be located between the two electrodes of an apparatus suitable to perform a free-flow electrophoretic separation. A separation zone is formed by at least one separation medium. A typical separation zone may be encompassed on each side by a stabilizing medium, a focus medium or an electrode medium. In certain embodiments, a separation medium forms a focus medium zone, i.e., the separation zone comprises a focus medium. In further embodiments, a focus medium may even act as a stabilizing medium, i.e., a separation zone may comprise a focus medium that acts as a stabilizing medium.

The term "focus medium" as used herein refers to a separation buffer medium comprising an acid for an anodic focus medium or a base for a cathodic focus medium, respectively, which forms a conductivity step and, optionally, a pH step regarding the adjacent separation buffer medium. A focus zone formed by at least one separation buffer medium reduces the movement of analytes towards the anode or cathode essential to zero due to a conductivity step. Such a conductivity step can be achieved by adding a strong acid or strong base to the separation buffer medium forming the focus zone. The concentration of the acid and base will be chosen so as to be sufficient to increase the conductivity of the at least one separation buffer medium focus medium, preferably by a factor of at least 2, and more preferably of at least 3, at least 5, or even more with regard to an adjacent separation buffer medium. This abrupt increase in the electrical conductivity of the medium is useful to accumulate analytes with a different pI as the pH range of the separation buffer media at the border of the two media having different conductivity values since the mobility of analytes moving to the anode or cathode, respectively is reduced to essentially zero. The principles of "focus media" are described in, e.g., U.S. Patent 7,169,278, and post-published WO 2008/087218. As will be understood, a focus zone is typically formed by one focus medium.

In the context of the present application, the terms "to separate" and "separation" are intended to mean any spatial partitioning of a mixture of two or more analytes based on their different behavior in an electrical field. Separation therefore includes, but is not limited to fractionation as well as to a specific and selective enrichment or depletion, concentration and/or isolation of certain fractions or analytes contained in the sample. However, it will be appreciated that fractionation is generally understood to mean a partitioning or depletion of certain analytes within a sample from the remainder of the analytes, regardless of whether said other analytes are further separated during the electrophoresis step. It is readily apparent that there is no clear distinction between the term fractionation and separation, although the latter means a finer or more detailed spatial partitioning of the various analytes in a sample. Thus, whenever the application refers to the terms "to separate" or "separation", they are intended to include at least one of the foregoing meanings, including separation, fractionation, or depletion.

The separation may principally be carried out in a preparative manner so that certain fractions are subsequently collected, or may merely be carried out analytically, where the analyte of interest or its presence in a certain fraction is merely detected by suitable means, but not collected, e.g. for further use.

It will be understood that most free flow electrophoreses are, already for practical reasons, carried out between 0°C and about 40°C (typically at room temperature), although they are not limited to this temperature range. The chosen temperature essentially depends on the analyte or analytes of interest. Therefore, the term "increased temperature" when used in the context of volatile buffer components according to embodiments of the present invention, relates to temperatures above the working conditions used in a standard FFE run.

Typical analytes that can be separated by an FFE method according to the present invention include, but are not limited to bioparticles, biopolymers and biomolecules such as proteins, especially membrane associated proteins, integral membrane proteins and lipophilic proteins, protein aggregates, protein complexes, peptides, hydrophobic peptides, DNA-protein complexes, DNA, membranes, membrane fragments, lipids, saccharides and derivatives thereof, polysaccharides and derivatives thereof, hormones, liposomes, virus particles, antibodies, antibody complexes, nanoparticles or any combination thereof, as well as other inorganic or organic molecules, *e.g.*, surface charge-modified polymers and particles such as constituents of plastic, melamine resins, latex paint particles, polystyrenes, polymethylmethacrylates, dextranes, cellulose derivatives, polyacids, pharmaceutically drugs, prodrugs, a metabolite of a drug explosives, toxins, carcinogens, poisons, allergens, infectious agents or any combination thereof.

The sample to be separated is either added to the separation medium that is present in the separation space or separation chamber between the anode(s) and the cathode(s) of an FFE apparatus, or is preferably introduced separately into the separation space of an FFE apparatus, typically through dedicated sample inlets provided in the FFE apparatus. The various analytes in the sample within the separation medium are then separated by applying an electrical field while being fluidically driven towards the outlet end of the FFE apparatus. Suitable FFE devices are known in the art and are, for example, marketed under the name BD™ Free Flow Electrophoresis System (BD GmbH, Germany). In addition, suitable FFE devices that can be used with the separation and stabilizing media of embodiments of the present invention have been described in a number of patent applications, including US Pat. 5,275,706, US Pat. 6,328,868, US applications US 2004/050697, US 2004/050698, US 2004/045826, and US 2004/026251, and intermediate documents WO 2008/053047 and WO 2008/025806.

Several FFE operation modes are known to those of skill in the art and are contemplated in the context of embodiments of the present invention. For example, the sample and separation medium may be continuously driven towards the outlet end while applying an electrical field between the anode and the cathode of an FFE apparatus ("continuous mode"). Continuous mode in the context of FFE should be understood to mean that the injection step as well as the separation step occurs continuously and simultaneously. The electrophoretic separation occurs while the medium and the analytes pass through the electrophoresis chamber where the different species are being separated according to their pI (IEF), net charge density (ZE) or electrophoretic mobility (ITP). Continuous mode FFE allows continuous injection and recovery of the analytes without the need to carry out several independent "runs" (one run being understood as a sequence of sample injection, separation and subsequent collection and/or detection). It will be appreciated that continuous mode FFE includes separation techniques wherein the bulk flow rate is reduced (but not stopped) compared to the initial bulk flow rate while the analytes pass the separation space between the electrodes in order to increase the separation time. In the latter case, however, one can no longer speak of a true continuous mode because the reduction of the bulk flow rate will only make sense for a limited amount of a sample.

Another FFE operation mode known as the so-called "interval mode" in connection with FFE applications has also been described in the art. For example, a process of non-continuous (i.e. interval) deflection electrophoresis is shown in U.S. patent 6,328,868. In this patent, the sample and separation medium are both introduced into an electrophoresis chamber, and then separated using an electrophoresis mode such as zone electrophoresis, isotachophoresis, or isoelectric focusing, and are finally expelled from the chamber through fractionation outlets. Embodiments of the '868 patent describe the separation media and sample movement to be unidirectional, traveling from the inlet end towards the outlet end of the chamber. This direction, unlike in traditional capillary electrophoresis, is shared by the orientation of the elongated electrodes. In the static interval mode described, e.g., in the '868 invention, acceleration of the sample between the electrodes caused by a pump or some other fluidic displacement element only takes place when the electrical field is off or at least when the voltage is ineffective for electrophoretic migration, i.e., when no part of the sample is being subjected to an effective electric field.

In other words, the interval process is characterized by a loading phase where the sample and media are introduced into the separation chamber of the electrophoresis apparatus, followed by a separation process where the bulk flow of the medium including the sample is halted while applying an electrical field to achieve separation. After separation/fractionation of the sample, the electrical field is turned off or reduced to be ineffective and the bulk flow is again turned on so that the fractionated sample is driven towards the outlet end and subsequently collected/detected in a suitable container, e.g., in a microtiter plate.

The so-called cyclic or cyclic interval mode in the context of FFE as used herein has been described in intermediate document WO 2008/025806. In sum, the cyclic interval mode is characterized by at least one, and possible multiple reversals of the bulk flow direction while the sample is being held in the electrophoretic field between the elongated electrodes. In contrast to static interval mode, the sample is constantly in motion thereby allowing higher field strength and thus better (or faster) separation. Additionally, by reversing the bulk flow of the sample between the elongated electrodes, the residence time of the analytes in the electrical field can be increased considerably, thereby offering increased separation time and/or higher separation efficiency and better resolution. The reversal of the bulk flow into either direction parallel to the elongated electrodes (termed a cycle) can be repeated for as often as needed in the specific situation, although practical reasons and the desire to obtain a separation in a short time will typically limit the number of cycles carried out in this mode.

Typical separation times (transit times for the analytes in the medium) during which an electrical field is applied range from a couple of minutes to about one hour per FFE separation run, although longer separations may also be possible under certain conditions. The transit time of the analytes in the sample will be dependent on the flow rate of the bulk separation medium passing through the FFE apparatus and is usually at least 10 minutes, particularly if the separation media are used together with the stabilizing media of embodiments of the present invention. In any event, the separation media described herein may under certain conditions even allow the efficient separation/fractionation of analytes in less than 10 minutes or even less than 7 or 5 minutes. In general terms, separations performed in ZE mode will typically be shorter than those performed in IEF mode, particularly when operated in cyclic interval mode where the transition time can principally be extended for as long as desired, provided the conditions in the separation space are sufficiently constant during the separation.

After having achieved the desired separation or fractionation of the analytes in the sample, the electrical field is usually turned off and the separated/fractionated analytes of interest are subsequently either collected, typically in a suitable number of fractions, from the FFE device (preparative applications), or at least detected by suitable means (analytic applications) in a suitable container, e.g., in a microtiter plate. As is readily apparent, particularly for preparative applications (which in this context is meant to include downstream analytic application by MS where the presence of the analyte(s) is required), the separation according to the present invention offers the advantage that the collected samples can be conveniently and quickly prepared for subsequent analysis.

### Volatile FFE Separation Media

The volatile FFE separation media used according to the present invention are normally in the form of aqueous solutions. Of course, the media described herein can also be provided in the form of a concentrated solution to be diluted to the appropriate concentration or even in dry form (e.g., crystalline, amorphous or even lyophilized) comprising the various ingredients of the medium in either a single container or distributed in several containers (e.g., in kit form). The dry ingredients may then be reconstituted with water prior to the FFE application.

A volatile separation medium used according to the present invention should be understood to represent in its ready-to-use form a composition, preferably an aqueous composition, that includes a buffer system comprising at least one buffer acid and at least one buffer base, wherein all of the buffer compounds are volatile. It is desired that a volatile separation medium is only composed of volatile buffer components and water, i.e. the medium does not contain further strong acids and bases and/or buffer acids and bases which are not volatile. Optionally, at least one of the buffer compounds may be capable of functioning as a (volatile) matrix for mass spectrometry, particularly in MALDI applications.

The term "volatile" used in connection with the buffer systems of the present invention should be understood to refer to the ability of the buffer compounds (i.e., buffer acids and buffer bases)to be completely removable from an aqueous sample under MALDI mass spectrometry working conditions, i.e., the buffer compound can be evaporated without leaving behind any residual compound (e.g., a salt), i.e. residue-free. In contrast, the term "non-volatile" as used herein refers to buffer compounds that cannot be removed residue-free, i.e. at least one compound of the buffer system is non-volatile and cannot be evaporated under said conditions.

In its broadest meaning, a volatile buffer compound according to the present invention can be removed residue-free under MALDI mass spectrometry working conditions although it will be appreciated that a volatile buffer compound must essentially be "non-volatile under FFE working conditions" (i.e., atmospheric pressure and temperature ranges of typically between 0 and 40 °C as explained hereinabove).

The term "non-volatile under FFE working conditions" means a volatility of a buffer compound leading to a concentration reduction of the respective buffer compound in the separation medium of less than 5% w/v or, preferably less than 2% w/v under working conditions and during the separation period of FFE. Most preferably, no concentration reduction will be observed at all under working conditions and the separation period of FFE.

In this context, the skilled person will understand that the analyte(s) that is (are) present in a sample comprising volatile buffer compounds will be non-volatile under the afore-mentioned conditions, i.e. the analyte(s) is (are) essentially not modified (e.g., by fragmentation or oxidation) and remain(s) in solution or in its (their) solid state. Under mass spectrometric working conditions, the analyte(s) will also be volatile and will be ionizable (required for detection by MS).

The term "residue-free" in the sense of the present invention is to be understood that the volatile compound itself evaporates completely, but that residues caused, e.g., by an impurity of the used substances, may be non-volatile. However, it is well known to those of skill in the art that only compounds having the highest purity grade available should be used for analytic purposes, and particularly so for mass spectrometric analysis.

Removal of the solvent and buffer compounds by "evaporation" as used herein should be understood to refer to a removal from the analytes of interest through transferring the compounds into the gas phase and subsequent elimination of the gas phase by suitable means. Thus, evaporation as defined herein is different from eliminating the buffer compounds by techniques commonly referred to as buffer exchange (sometimes also referred to as "desalting"), including column chromatography, dialysis or cut-off filtration methods, or techniques known as solid phase extraction or analyte precipitation. Alternatively, in certain applications that are not included under the term evaporation, the buffer compounds present in salt form are simply washed away with water, although this obviously leads to an undesirable loss of sample material and, moreover, non-quantitative removal of the buffer compounds. Those of skill in the art will appreciate that the volatile buffer compounds as defined herein could, at least in principle, likewise be removed by such buffer exchange or solid phase extraction techniques, although this would of course neglect the distinct advantage offered by the volatility of the buffers (and makes no sense in view of the potential problems connected with buffer exchange techniques, e.g., difficult handling and low sample recovery).

Suitable exemplary techniques for removing the solvent and the volatile buffer compounds from a sample collected from an FFE separation step by evaporation include, but are not limited to, vacuum centrifugation using suitable devices such as a centrifugal evaporator or a vacuum centrifuge known for example under the name SpeedVac^{®}, by lyophilization or by a (gentle) heating of the aqueous sample. Other possibilities to evaporate the solvent and the buffer compounds include evaporation by subjecting the sample to reduced pressure conditions, e.g. applying a vacuum to the sample placed on a target plate used in mass spectrometric analysis. Those of skill in the art will appreciate that most mass spectrometric methods operate under vacuum conditions (for example vacuum MALDI) so that the volatile buffer compounds are conveniently removed after the introduction of the sample into the MS instrument, but prior to ionization.

Preferably, the volatile buffer compounds are removable under conditions of reduced pressure and/or increased temperature. Moreover, the volatile buffer compounds may even be evaporated under ambient temperature and atmospheric pressure conditions, particularly if the volatile buffer-containing sample is present in a small volume (*e.g.*, for mass spectrometric analysis). However, in most cases at least some buffer solution will not evaporate readily under those conditions, or the volatile buffer compounds can only be removed under harsher conditions (e.g., in vacuum and/or high temperatures, optionally with irradiation, such as under mass spectrometric working conditions).

In certain embodiments of the present invention, the FFE separation media comprise volatile buffer compounds wherein at least one of the volatile buffer compounds may act as a (volatile) matrix for mass spectrometric analysis, i.e., the compound can only be removed under mass spectrometric working conditions.

A matrix compound as used herein may be a liquid at room temperature or an optionally crystalline solid which is at least soluble in water to a concentration which allows the production of a volatile buffer system suitable for FFE. The volatile matrix is a "light absorbing" matrix. As used herein, the term "light absorbing" refers to the ability of the matrix to absorb the desorption-light so as to aid in the desorption and ionization of the analyte. The preferred matrix has a high sublimation rate under mass spectrometric conditions and absorbs the desorption light strongly (*e.g.*, laser bombardment at room temperature and vacuum).

A matrix-analyte mixture for MALDI applications typically comprises a physical mixture of the matrix with the compound to be analyzed. Matrix-analyte mixtures used as samples for mass spectrometric analysis may of course comprise more than one analyte. Furthermore, they may comprise one or more volatile buffer compounds and/or further additives. The matrix analyte mixture may, or may not, contain adducts of the matrix with the molecule. However, if adducts are formed, they will typically be only weakly associated such that they may be readily dissociated upon irradiation desorption and ionization.

Provided the compound satisfies the volatility requirements set out herein, a buffer acid is intended to mean any chemical compound having at least one acid function, i.e., the compound must be capable of donating a proton in a reaction (a Bronsted-Lowry acid). Similarly, a buffer base is intended to mean a compound having at least one base function, i.e. the compound must be capable of accepting a proton in a reaction (a Bronsted-Lowry base).

As is well-known in the art, the pKa of a compound determines which fraction of the acid function is deprotonated and which fraction has the hydrogen atom still attached at a given pH under equilibrium conditions. For example, in the case of mono-functional acids 50% of the compound is deprotonated (thus increasing the negative charge to the compound) when the pH of an aqueous solution is equal to the pKa of a given compound. When the pKa is one unit higher than the pH of a solution, only 10% of the compound will be deprotonated, whereas 90% will be deprotonated at a pKa one unit below the pH.

At least a tiny fraction of the buffer acid for the separation media should be deprotonated and a tiny fraction of the buffer base should be protonated at a given pH or pH range in order to provide a sufficient number of charged species to the solution required for achieving a suitable electrical conductivity in the separation medium.

The buffer base should likewise have a basicity (for ease of reference expressed by the pKa value (i.e. acidity) of the corresponding acid) that results ― at a given pH - in a certain fraction being protonated, and another fraction wherein the compound is still without the attached proton.

In other words, those of skill in the art will understand that the pKa value (indicating the "strength" of an acid or a base) of the buffer acids and the buffer bases should ideally be not too dissimilar to the pH of the separation medium. In this context, it is noted that the reference to the pH of the separation medium should be understood to refer to the pH of the aqueous medium including all components before applying an electrical field. Such a pH can be easily determined, e.g., by conventional pH meters before introducing the medium into the separation space of the electrophoresis apparatus. Depending on the contents of the separation and the stabilizing medium, the application of an electrical field will lead to the formation of a pH gradient within the separation medium so that the separation medium no longer has a uniform pH over the whole separation space. Thus, unless indicated otherwise, any reference to the pH of the separation medium in the present application always refers to the pH prior to applying the electrical field.

In addition, because the buffer compounds must be volatile, it is important to select the buffer acid and buffer base so that their pKa difference is not too high, because the compounds will otherwise be ionized which reduces or diminishes their volatility. In other words, the pKa difference between the buffer acid and the buffer base should not exceed 4 pH units

Those of skill in the art will be able to calculate the pH of a solution when the pKa values and the concentrations of the buffer acids and bases in the solution are known (e.g., by applying the Henderson-Hasselbalch equation). For example, an equimolar dilute aqueous solution of one acid having a pKa of 8.0 and one base having a pKa of 6.0 will result in a solution having a pH of about 7.0 (pKa[acid]+pKa[base]/2).

In general, the volatile buffer acids and buffer bases are selected so that the pH of the separation medium is in the range of about 2 to 12, although preferably, the pH will be somewhere in the range of about 3 to 11. Since typical separation problems will encompass samples of biological origin, preferred pH values of the separation medium (either constant pH or the end points of a pH gradient) will often range between pH 4 and 10, or even between pH 5 and 9, although the pH of the separation medium will of course depend on the specific separation problem and the nature of the analytes.

As a general rule, it can be said that for a larger pH range, more than one buffer acid and buffer base are typically required to provide sufficient buffering and electrophoretic capacity over the whole pH range, whereas suitable separation media exhibiting a constant pH or a flat pH gradient can be designed with only one buffer acid and one buffer base. While the volatile separation media may comprise more than one buffer acid and more than one buffer base, it is generally desirable to keep the number of ingredients as low as possible, especially since additional buffer compounds must also be volatile. In addition, the costs involved and the increased number of different species present in the separation space result in a more complex separation mixture make it more advantageous to have a binary buffer system.

Accordingly, the volatile FFE separation media may contain an aqueous binary volatile buffer system comprising only one volatile buffer acid and one volatile buffer base, particularly when the separation can be carried out by forming a rather flat pH profile within the separation space of an FFE apparatus.

The volatile FFE separation media will form a pH gradient within the separation space between the anode and the cathode of an FFE apparatus. The gradient might be either in the form of an essentially linear gradient or in the form of non-linear gradient, e.g. a step-wise pH "gradient", wherein the pH difference between the lowest pH and the highest pH in the separation medium during electrophoresis is generally more than about 0.2 pH units and less than 5 pH units. Preferably, the pH difference is between 0.5 and 4 pH units.

In cases where the formation of a pH gradient of between 0.2 and 5 pH units during electrophoresis is required or desirable (i.e., for FFE separations operated in IEF mode), it will be understood that the volatile FFE separation medium will typically consist of several separate fractions (separate separation media) which comprise varying concentrations of the buffer acids and buffer bases in the medium in order to establish a pre-formed pH gradient. In other words, the separation medium may comprise a plurality of separation media fractions having a different pH-value to create a pH gradient between the anode and the cathode of an FFE apparatus. Typically, the number of separate fractions (separation media) will be at least 2 and will, for practical reasons, rarely exceed 15 fractions. For particular embodiments, the number of fractions having different acid and base concentrations or concentration ratios is between 2 and 15, 3 and 12, 4 and 9, or even 5 to 8 fractions. The pH of each fraction may be essentially the same or may be different to any other fraction. Alternatively, several fractions may have essentially the same pH, but may have a different pH compared to yet other fractions, thereby forming pH steps within the separation medium.

While the number of sub-fractions is not limited technically, in practice, the number will often be governed or at least influenced by the number of different media inlets of the electrophoresis apparatus used for the separation. Separation media might form a step-wise gradient, which may comprise increasing and decreasing pH steps in variable order. Alternatively, the separation media may form a gradient wherein the pH of the separation media fractions introduced into the FFE apparatus increases from the anode towards the cathode of an FFE apparatus to create a pH gradient having a low pH value towards the anode and a high pH value towards the cathode. Although the volatile separation media are particularly suitable for free flow IEF, they are not strictly limited to free flow IEF applications. Preferably, however, the volatile separation media are used in free flow IEF applications.

In other embodiments, the volatile separation medium will form an essentially constant pH between the cathode and anode of an FFE apparatus, at least at the beginning of an FFE separation step, and will therefore be particularly useful for FFE separation methods operated, e.g., in zone electrophoresis mode (FF-ZE).

For the volatile FFE separation media , the relative concentrations of the buffer acids and the buffer bases should be within a certain ratio. Thus, the ratio between the concentration of all buffer acids and buffer bases should typically be between about 9:1 and about 1:9. In preferred embodiments, the ratio is even lower, such as between 4:1 to 1:4, or between 3:1 and 1:3, or even between 2:1 and 1:2. Particularly in applications where a constant pH is desired (i.e., in ZE applications), a ratio of about 1, i.e., wherein the concentration of the buffer base is essentially equal to the concentration of the buffer base, is preferred.

Regardless of the above, the skilled person will understand that the exact concentration of a given acid or base may depend on a number of factors including the nature of the sample, the presence of other additives (see below) and the desired pH of the separation medium and may be adapted accordingly. However, the buffering and electrophoretic capacity of the medium will at some point be lost when the concentration of one compound (either the buffer acid or the buffer base) is chosen too low, i.e., outside the above-listed ratios.

With regard to the absolute concentrations of the buffer compounds required for achieving successful separations, those of skill in the art will realize that there can be no strict rule, although it should generally be understood that the concentration should be high enough to provide sufficient electrical conductivity and buffering capacity, but at the same time as low as possible, particularly when the sample collected from the FFE separation step is to be subjected to downstream analyses such as MS where the buffer compounds should be removed from the sample. Analytes having a high (surface) charge density (e.g., peptides or proteins) will, as a general rule, require higher concentrations of the buffer compounds than analytes having a relatively low charge density (e.g., cells or cell organelles). Similarly, for applications wherein the separation medium exhibits a constant pH (i.e., flat pH profile), a lower concentration of the buffer compounds is required to achieve the desired buffering capacity, whereas for pH gradients (e.g. in IEF applications), the concentration should be higher, particularly in cases with only one or two buffer acids/bases, because the difference between the pH and the pKa of the buffer compound may be larger leading to less ionization (protonation and deprotonation, respectively) of the compound.

With the above principles in mind, it is contemplated that the volatile separation media include volatile buffer acids and volatile buffer bases at a concentration of at least about 1 mM to about 200 mM, more preferably, the concentrations of the volatile buffer compounds are individually chosen from about 2 mM to 100 mM and most preferably from 5 mM to about 50 mM. When referring to the concentration of the buffer acids and bases, respectively, it will be appreciated that the given numbers are intended to refer to the total concentration of any (if more than one) buffer acid / buffer base in a given separation (as well as stabilizing) medium.

Suitable volatile buffer acids that can be used for the separation of analytes, particularly analytes of biological origin, include but are not limited to formic acid, acetic acid, picolinic acid, diacetyl acetone, o-, m- and p-cresols, o-, m-, p-Cl-phenols, hydroxy-pyridines, fluorinated alcohols and fluorinated carbonyl compounds, such as trifluoroethanol, tetrafluoropropanol, tetrafluoroacetone, and the like. It will be understood that the foregoing list is not meant to be exhaustive or limiting in any way, since those of skill in the art will be able to find numerous possible buffer acids having a suitable pKa and the volatile properties required for their inclusion in the separation media.

Similarly, suitable volatile buffer bases include but are not limited to the buffer compounds TRIS, various hydroxy-pyridines, isonicotinic acid amide, various pyridine carbinols, diethanolamine, benzylamine, pyridine-ethanol and dimethylaminopropionitril.. Again, the list is not meant to be exhaustive or limiting, because those of skill in the art will be able to find other possible buffer bases having a suitable pKa and the desired volatile properties required for their inclusion in the separation media.

Volatile separation media may comprise only one buffer acid and one buffer base, for example, acetic acid and TRIS, picolinic acid and diethanolamine, acetic acid and dimethlamino-propionitril, picolinic acid and 2-pyridine ethanol, benzylamine and 2-hydroxypyridine, tri-n-propylamine and trifluoroethanol, as described in more detail in the Example section.

It will be appreciated by those of skill in the art that the ideal separation medium comprises only the aqueous volatile buffer system, although it is specifically contemplated herein that the separation medium may also comprise further additives for, e.g., maintaining analyte integrity or function. Of course, such additives should only be added if absolutely necessary and only at the lowest possible concentration required to achieve an intended effect, particularly if they are known to be incompatible with downstream analysis by MS.

Possible additives are preferably selected from but are not limited to other acids and/or bases, "essential" mono- and divalent anions and cations, viscosity enhancers, solubilizing agents, affinity ligands, protective agents or reducing agents. Essential mono- and divalent anions and cations in the sense of the present application are ions that may be needed for maintaining the structural and/or functional integrity of the analytes in the sample. Ions such as calcium ions, magnesium ions, zinc ions or ferrous ions might be present in very low concentrations. Viscosity enhancers and solubilizing agents (such as hydroxypropyl-methylcellulose, hydrophilic polymeric derivatives including polyethylene glycol or polyalcohols, carbohydrates (such as sucrose), dextrins, cyclodextrins and lectins) may also be present in a sample as well as low concentrations of affinity ligands (such as EDTA or EGTA) or protective agents to prevent contamination of a sample with microorganisms (e.g. azide). In certain cases, it may be required to add reducing agents to prevent the oxidation of an analyte in the solution. A suitable reducing agent that may be added to the sample and/or the separation medium includes mercaptoethanol, dithiothreitol (DTT), ascorbic acid, and the like.

### Volatile buffers in combination with cleavable surfactants

One embodiment of the present invention relates to the use of media comprising volatile buffer compounds in combination with MS-compatible zwitterionic or nonionic surfactants as described below. The zwitterionic or nonionic nature of these surfactants makes them suitable for free flow electrophoresis.

The terms "surfactant", "detergent", "wetting agent" and "emulsifier" may be used interchangeably herein and refer to molecules or compositions which are capable of reducing the surface tension in water. For example, a surfactant promotes keeping a hydrophobic peptide or protein in an aqueous solution.

The term "MS-compatible zwitterionic or nonionic surfactant" as used herein means MS-compatible surfactants that can be zwitterionic or nonionic. A zwitterionic or nonionic surfactant may be in sum negatively or positively charged depending on the pH of a distinct area between two electrodes, but a nonionic, MS-compatible surfactant is in any event not charged within the pH range, wherein an analyte of interest is inserted into and is eluted from an apparatus suitable for free-flow electrophoresis. Furthermore, it is to be understood that the isoelectric point of a zwitterionic, MS-compatible surfactant as used in the present invention is generally within the pH range of the separation zone. The term "MS-compatible surfactant" and "MS-compatible zwitterionic or nonionic surfactant" as used herein may be used interchangeably since a surfactant suitable for FFE must be either zwitterionic or nonionic within the pH range of the separation zone.

The term "zwitterionic" as used herein in the context of surfactants refers to a compound that is electrically neutral but carries formal positive and negative charges on different atoms. Examples, which are not to be understood as limiting, are, e.g., betaine derivatives, preferably sulfobetaines such as 3-(trimethylammonium)-propylsulfonat or phosphobetaines. Typically, the isoelectric point of a zwitterionic surfactant as used in the present invention is within the pH range of the separation zone.

The term "nonionic" as used herein in the context of surfactants refers to (bi)polar compounds. Examples include but are not limited to saccharide derivatives. Typically, a nonionic surfactant is uncharged within the pH range of the separation zone. However, depending on the pH range of said zone, it may happen that a nonionic compound nevertheless becomes charged at a certain pH outside the pH range used to separate an analyte of interest.

The term "MS-compatible" as used herein denotes surfactants that can be used in MS analyses. The term "MS-compatible surfactants" encompasses surfactants that are *per se* suitable for MS analysis, i.e. without modification, and also encompasses "cleavable" surfactants which are not MS-compatible in their non-cleaved state but which can be cleaved at at least one position into at least two moieties. Said moieties can be MS-compatible or non-MS-compatible. A non MS-compatible moiety of a cleavable surfactant as described herein can be easily removed by, e.g., centrifugation, filtration or evaporation, whereas an MS-compatible moiety may stay in solution and may be present during a downstream analysis or may under certain conditions likewise be removed by centrifugation, filtration or evaporation. In some embodiments, more than one resulting moiety is MS-compatible. Such MS-compatible cleavable surfactants are suitable, e.g., in methods comprising a protein digestion step. A protein may be insoluble in water but its fragments or part of the fragments resulting from the digest may be soluble and can be analyzed by, e.g., MS.

As a non-limiting example for the advantages provided by the cleavable surfactants described herein, the sensitivity of a mass spectrometric detection of an analyte in the presence of a suitable, MS-compatible surfactant is much greater than the sensitivity of a mass spectrometric detection of an analyte in the presence of, e.g., SDS. In most cases, a mass spectrum of a sample comprising SDS exhibits no signals at all or only weak signals due to an analyte treated with SDS or break down products of said analyte. In contrast, a sample that comprises said analyte and that is subjected to a mass spectrometric analysis in the presence of an MS-compatible surfactant instead of SDS exhibits signals related to the analyte and to break-down products of said analyte.

Accordingly, an MS-compatible surfactant can be understood as a surfactant whose presence in a sample comprising a soluble control analyte having a defined concentration (S sample) that is subjected to a mass spectrometric analysis leads to mass spectra comprising essentially at least the same mass peaks (at similar or even higher intensity) compared to a mass spectrum of a sample comprising said control analyte in the same defined concentration, but without a surfactant (C (control) sample), i.e. the mass spectra are essentially identical. In some embodiments, an MS-spectrum derived from an S sample may even comprise more mass peaks due to break down products of the control analyte compared to an MS-spectrum derived from a C sample, e.g., when a control analyte is digested prior to mass spectrometric analysis and break down products are hydrophobic and precipitate in a C sample prior to mass spectrometric analysis.

A suitable procedure to identify MS-compatible surfactants is for example described in WO 2006/047614. BSA, a commonly utilized test protein can be used as an exemplary intact protein and a tryptic digest of β-galactosidase (t-beta-gal) can be used as an exemplary peptide mixture. The β-galactosidase tryptic fragments have a range of solubilities from hydrophilic to hydrophobic. Moreover, many other substances can also act as control analytes as long as they are soluble enough in water so as to yield an MS-spectrum.

As a non-limiting example, a MALDI-TOF analysis of a β-galactosidase S-sample can be compared with a MALDI-TOF analysis of an equivalent C sample. The ionization suppression in the 900-3700 m/z range can be determined by comparing the matches of the mass-ions identified in the S and the C sample. The skilled person will know how to perform a useful MALDI-TOF analysis.

Preferably, the intensity of each of the aligned mass peaks of the S sample is not less than 25% compared to the intensity of the identical mass peak of the C sample, more preferably it is essentially the same or, most preferably, it is even higher than the intensity of the same peak of the C sample.

In respect of merely slightly soluble or insoluble analyte(s) or digestion products of a (control) analyte, it is preferred that the intensity of mass peaks within a mass spectrum of a sample comprising said merely slightly soluble or insoluble analyte/digestion product and an MS-compatible surfactant is at least a factor 1, 1.5, 3 5, 10, 100 or 1000 times higher than the intensity of identical mass peaks of a mass spectrum obtained for a sample containing no surfactants at all.

"Essentially identical" as used herein means that at least 60%, at least 70%, preferably at least 80%, more preferably at least 90% and most preferably about 100% of the mass peaks due to the break-down products of the control analyte of the C sample are also present in the spectra of the S sample. Search engines such as MASCOT^{®} can be used to compare an MS-spectrum of, e.g., digested t-beta-gal or BSA with a theoretical MS-spectrum of a digest of t-beta-gal or a theoretical MS-spectrum of BSA. The range from 900 to 2600 m/z should typically be considered.

In other words, a mass spectrum obtained in the presence of an MS-compatible zwitterionic or nonionic surfactant of the present invention comprises at least 60%, at least 70%, preferably at least 80%, more preferably at least 90% and most preferably 100% of the mass peaks due to the break-down products of a control analyte of a C sample.

The mass difference between a mass signal of the C sample and the identical mass signal of the S sample may vary within the error of measurement depending from the used method or apparatus. A skilled person will understand how to determine such error of measurement. For example, the mass measurement accuracy of an ion trap mass spectrometer is typically calculated between 0.5 and 2.5 dalton, whereas the mass measurement accuracy with errors less than 50 ppm or even less than 25 ppm can be achieved by measuring mass signals ranging from around 900 to 3700 dalton with MALDI-TOF applications.

Regardless of the compatibility of the surfactants of the invention, it will be understood that the concentration of a surfactant in free-flow electrophoresis and a subsequent analysis by MS should be nevertheless as low as possible, preferably around its critical micelle concentration (CMC). Suitable methods in the art to determine the CMC of a surfactant are known to a person skilled in the art. Furthermore, for many surfactants, the CMC is already known.

The MS-compatible surfactants are typically used in concentrations below 100 mM. Depending on the surfactant, concentrations of below 50 mM, below 30 mM, below 15, below 5, below 1 and even below 0.1 mM may be suitable. For example, the amount of the cleavable surfactant PPS within a sample subjected to a free-flow electrophoresis as used in the present invention was 0.1% (w/v). This amount corresponds to a concentration of between 2 and 10 mM (depending on the alkyl chain combination of PPS).

A skilled person can easily identify a typical MS-compatible surfactant as described herein by comparing the mass spectra of a C sample and an S sample each comprising a control analyte with a distinct concentration. This method allows a skilled person to determine whether a surfactant is MS-compatible or not. Notably, it is to be expected that analytes, which are nearly insoluble or insoluble in water (without a surfactant), would hardly give an analyzable mass spectrum at all when the sample preparation does not include the use of a surfactant. Therefore, a separation of an analyte of interest by free-flow electrophoresis in the presence of an MS-compatible surfactant yields samples that are suitable for identifying and characterizing such analytes in a downstream analysis by mass spectrometry.

In some embodiments, the addition of surfactants in methods of the present invention may be necessary. In the latter case it is most preferred that such a surfactant is a MS-compatible zwitterionic or nonionic surfactant. It will be understood, that an MS-compatible zwitterionic or nonionic surfactant as described herein may be comprised in a sample medium and/or within at least one separation medium. In other words, a method for separating analytes from a sample by free-flow electrophoresis according to embodiments of the present invention may comprise the use of at least one MS-compatible zwitterionic or nonionic surfactant, wherein said surfactant is present in the sample medium and/or in at least one separation medium. Although it will be understood that the presence of merely one MS-compatible zwitterionic or nonionic surfactant in a sample medium or in a separation medium is preferred, any combination of multiple MS-compatible zwitterionic or nonionic surfactants within a sample medium and/or a separation medium is possible. When a surfactant or surfactants have to be present in at least one medium of the present invention, it will be advantageous if all surfactants are MS-compatible zwitterionic or nonionic surfactants. A person skilled in the art will understand that each of the surfactants can be present within a sample medium and/or at least one separation medium.

Furthermore, an MS-compatible surfactant as described herein can be MS-compatible *per se* during the free-flow electrophoresis separation, or it can become MS-compatible through the cleavage of the surfactant. In the latter case an MS-compatible surfactant is an MS-compatible cleavable surfactant. It may be preferred that at least one MS-compatible zwitterionic or nonionic surfactant is cleavable, although other MS-compatible zwitterionic or nonionic surfactants may be present. It may be advantageous that all MS-compatible surfactants within a sample medium and/or a separation medium are cleavable surfactants.

The terms "MS-compatible zwitterionic or nonionic cleavable surfactant", "MS-compatible cleavable surfactant" or "cleavable surfactant" are used interchangeably herein and refer to surfactants that can be cleaved into at least two moieties under particular conditions. In one embodiment, at least one of the cleaved moieties is MS-compatible as defined above. Such an MS-compatible moiety can be present during mass spectrometric analysis or absent, e.g., evaporated prior to MS-analysis. Non-MS-compatible moieties precipitate after the cleavage or can be evaporated prior to MS analysis.

As will be explained below, it will be understood that more than two moieties may result from a cleaving step. As an example, an MS-compatible cleavable surfactant can be cleaved into a hydrophilic head group that is MS-compatible and remains in solution, and a hydrophobic, non-MS-compatible tail that can be easily removed from the sample by centrifugation or filtration. Accordingly, a method may comprise the use of at least one MS-compatible cleavable zwitterionic or nonionic surfactant from which at least one moiety can be removed from a sample or a fractionated sample by filtration, centrifugation and/or by evaporation after a cleavage.

Any surfactant comprising a bond that combines a hydrophobic moiety (tail) with a hydrophilic moiety (head group) that can be broken down by a cleaving agent under conditions, preferably wherein the analyte of interest is essentially stable and wherein all resulting non-MS-compatible moieties can be easily removed by centrifugation, filtration or evaporation, is suitable as an MS-compatible cleavable surfactant. Such a bond will be referred to as a cleavable bond. Preferably, such a bond is cleaved under conditions wherein an analyte of interest is essentially stable. An essentially stable analyte under conditions suitable to cleave a cleavable surfactant is to be understood as an analyte of interest, whereof at least about 80%, about 90%, preferably about 97%, more preferably about 99% and most preferably 100% of the amount of said analyte present during a cleavage step is unmodified after the cleavage step, i.e., the analyte is mainly, preferably completely, inert to a chemical reaction under the specific conditions during the cleavage step. Inert to a chemical reaction in this context means that no covalent bond within the analyte is broken or established during the cleavage step of the surfactant.

A "cleaving agent" as used herein refers to any instrument or compound or mixture of compounds in any form suitable to selectively cleave a bond within a cleavable surfactant. Non-limiting examples for compounds suitable to selectively cleave a cleavable surfactant would be acids or bases or a solution/mixture thereof to selectively cleave a acid or base labile bond within a cleavable surfactant. This and further examples are described in more detail below. Furthermore, the term "cleaving agent" encompasses instruments suitable to selectively cleave a bond within a cleavable surfactant. Such an instrument can be, e.g., a light emitting instrument that emits light of a discrete wavelength to cleave a photo labile, cleavable surfactant.

The term "solution for cleaving a cleavable surfactant" as used herein refers to any solution comprising an agent or a composition suitable to selectively cleave one or more bonds between a linker and a moiety within a cleavable surfactant resulting in at least two moieties wherefrom moieties which are non-MS-compatible can be easily removed from the sample by centrifugation, filtration or evaporation and MS-compatible moieties may stay in solution or may likewise be removed by centrifugation, filtration or evaporation.

An MS-compatible cleavable surfactant may comprise more than one cleavable bond, e.g., two cleavable bonds resulting in three moieties from one or more cleaving steps. Each cleavable bond can be independently selected from the group consisting of a covalent bond, an ionic bond, a hydrogen bonds, or a complex bond. One or more covalent bonds are preferred.

At least one cleavable zwitterionic or nonionic surfactant of at least one fraction of a sample separated by a free-flow electrophoretic separation may be cleaved after the electrophoretic separation, i.e., at least one MS-compatible zwitterionic or nonionic surfactant is cleavable into at least one MS-compatible moiety and a moiety that can be easily removed by filtration, evaporation or centrifugation. Again, it is noted that an MS-compatible moiety might be also removed by evaporation prior to a subsequent analysis, i.e., a non-MS-compatible moiety resulting from a cleavage step is not subjected to said downstream analysis, whereas an MS-compatible moiety might be present or, optionally, absent in a downstream analysis.

MS-compatible cleavable surfactants may comprise at least one acid labile bond, i.e., the surfactant is acid labile, or at least one base labile bond, i.e., the surfactant is base labile, or at least one photo labile bond, i.e., the surfactant is photo labile, or at least one chemo reactive bond, i.e., the surfactant is chemo reactive.

Acid and base labile cleavable surfactants may be cleaved by changing the pH of at least part of a fractionated sample/fraction, e.g., by acidifying or alkalifying of least part of a fractionated sample/fraction comprising an acid or base labile cleavable surfactant. Photo labile cleavable surfactants may be cleaved by irradiation, i.e. the cleavage of a cleavable surfactant is carried out by subjecting at least part of a fractionated sample/fraction comprising at least one photo labile cleavable surfactant to irradiation with light comprising or consisting of a defined wavelength suitable to selectively break the bond between a linker and a moiety of said surfactant. Chemo reactive cleavable surfactants may be cleaved by adding reactive agents, i.e. the cleavage of a cleavable surfactant is carried out by adding a reagent to at least part of a fractionated sample/fraction that is capable of breaking a bond within a chemo reactive surfactant. For example, a suitable reactant to cleave disulfide bonds and the like is DTT (dithiothreitiol) or a suitable reactant to cleave silane compounds of the general formula: 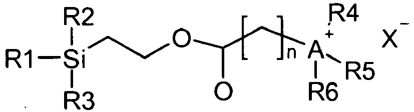
wherein R1 is selected from C₇-C₂₀ alkyl or C₇-C₃₀ alkyl aryl
R2, R3, R4, R5 and R6 are independently C₁-C₅ alkyl
A is N or P
X⁻ is halide
n is 1-5

One preferred chemo active cleavable surfactant for use in a FFE separation according to embodiments of the present invention is {2-[(dimethyl-octyl-silanyl)-ethoxy]-2-hydroxy-ethyl}-trimethyl ammonium bromide.

A group of photo labile surfactants are, e.g., cinnamate esters such as 3-(2,4,6-trihydroxyphenyl) acryl acid octyl ester.

An non-limiting example for an acid labile, cleavable surfactant is 3-[3-(1,1-bisalkoxyethyl)pyridine-1-yl]propane-1-sulfonate (PPS).

For chemo active cleavable surfactants and especially for acid or base labile cleavable surfactants, FFE methods provide distinct advantages over other electrophoretic methods/techniques. In fact, FFE allows using a wide variety of cleavable surfactants, which is not possible with other electrophoresis techniques. For example, acid labile cleavable surfactants such as PPS are extremely hygroscopic and are cleaved slowly by water at neutral pH, and at an accelerated rate at acidic or basic pH. According to Protein Discovery, the manufacturer of PPS, it is advised that once the package is opened to air, the contents should be immediately reconstituted in aqueous buffer (pH 7 ― 8), protected from elevated temperatures and used within 12 hours. This means that especially pH labile cleavable surfactants can only be used for electrophoresis if the duration of the experiment is relatively short. The maximum duration of the experiment is even lower when the pH is decreased or increased. Therefore, at non-neutral pH, the electrophoretic experiment must be carried out within an even shorter timeframe. The advantage of FFE is that an electrophoretic separation, e.g. free-flow IEF, can be performed within this short time frame required to maintain the stability of the surfactant. In contrast, IEF as performed in the first dimension of 2D-gel electrophoresis (or in the off-gel instrument) typically requires experiment times of 5 hours or more, or even longer (up to 7-9 hours or more). Thus, the cleavable detergent would be degraded to a larger extent, especially at very low or very high pH.

Furthermore, free-flow (interval-) zone electrophoresis for separating analytes can be performed at a constant pH wherein the surfactant is stable for a sufficiently long time.

In addition, the use of counter flow media can stabilize the cleavable detergent immediately after the separation has taken place. This allows a separation of analytes at highly acidic or basic pHs in a very short time frame (e.g., down to around 5 min) followed by immediately adjusting the pH through the counter flow. Accordingly, one embodiment of the present invention relates to a FFE method, wherein a counter flow medium is used to adopt the medium conditions so as to stabilize a cleavable detergent comprised therein after the free-flow electrophoresis, e.g., by adjusting the pH of a distinct fraction subsequent to a free-flow electrophoresis separation step.

It will be understood that these principles as described in the above non-limiting example can be extended to other types of cleavable detergents that are stable under certain separation conditions for only a limited amount of time.

The counter flow media can also be used in a different way, e.g., to introduce a cleaving agent that cleaves the surfactant for immediate further processing of the FFE fractions.

Accordingly, in another embodiment of the present invention the method comprises a free flow electrophoresis step wherein a counter flow medium comprising a cleaving agent is used to provide said cleaving agent to a sample or a fraction thereof after free-flow electrophoretic separation that comprises a cleavable surfactant to cleave said cleavable surfactant.

In case the analyte of interest is a protein or polypeptide, a digestion step of said protein or polypeptide may be carried out prior or subsequent to the free-flow electrophoresis step. Those of skilled in the art know how to carry out a protein digestion step, e.g., using trypsin. There is also no need to remove the MS-compatible surfactants used in the free-flow electrophoresis to perform said digestion step. To the contrary, the presence of said surfactants may even improve the digestion, whereas, e.g., urea has to be at least partially removed prior to said digestion step.

The protein digestion step may be carried out in at least one fraction collected from the free-flow electrophoresis step prior or subsequent to the cleavage step of a cleavable surfactant as described herein.

Typically, the removal of non-MS-compatible moieties is easily achieved by well-known methods leading to no or essentially no sample loss. A purification step is typically selected from the group consisting of evaporation, filtration and centrifugation to remove a precipitated moiety of a cleavable surfactant.

The term "essentially no sample loss" as used herein means that less than 5% of an analyte of interest, preferably less than 1%, more preferably less than 0.2% and most preferably less than 0.1% may, e.g., stick on a filter used to remove a precipitated moiety of a cleaved surfactant or may remain within the pellet of a precipitated moiety of a cleavable surfactant that is removed by centrifugation, or may vaporize together with a moiety of a cleavable surfactant or a volatile buffer compound.

In any case, for good results in downstream analysis by mass spectrometric applications, additives such as those mentioned hereinabove should or at times must preferably be avoided, not the least because most additives are known to be non-compatible with mass spectrometry in general, at least if present above certain threshold levels which are generally known in the art.

The presence of MS-compatible surfactants which are MS-compatible *per se* or which can be cleaved to yield at least one MS-compatible moiety and, optionally, a non-MS-compatible moiety that can be easily removed, is advantageous since purification steps that are time consuming and/or lead to sample-loss are not required. Accordingly, a method according to embodiments of the present invention that comprises the use of MS-compatible surfactants as described herein is carried out without a purification step to remove surfactants selected from the group consisting of dialysis, chromatography, reversed phase chromatography, ion exchange chromatography, surfactant exchange, protein precipitation, affinity chromatography, electro blotting, liquid-liquid phase extraction, and solid-liquid phase extraction. In other words, it is not necessary to subject a fraction obtained from a FFE separation according to embodiments of the present invention to such a purification step prior to a downstream analysis.

A combination of the volatile buffer compounds and MS-compatible surfactants as described herein offers the advantage of a notably reduced sample preparation of a fraction of a sample separated by FFE according to the present invention.

Accordingly, one embodiment of the present invention is related to a method for analyzing analytes as described herein, wherein the FFE step employs a separation medium comprising a volatile buffer system that further comprises at least one MS compatible zwitterionic or nonionic surfactant.

Specific examples for suitable separation media are described below in the Example section.

The present inventors have found that the volatile separation media described herein are particularly suitable and advantageous for matrix-free applications such as FFE since they allow a good separation of analytes, and offer the additional advantage that the buffer components can be removed easily and residue-free after eluting the separated fractions containing the analyte(s) of interest from the FFE device. The media described herein are particularly advantageous for FFE separations performed under native conditions (i.e., not disturbing the structural integrity of the analytes).

Furthermore, it will be apparent to those skilled in the art that most electrophoresis applications will advantageously employ an ensemble of separation media and stabilizing media that are adapted to the specific application and apparatus used for the separation / fractionation problem. However, certain embodiments of the present invention may use the volatile separation media in concert with commercially available proprietary stabilizing media (*e.g.*, available from BD GmbH, Germany).

### Kits Comprising Electrophoretic Media

It will be apparent to those skilled in the art that the volatile separation media described herein may be selected, prepared and used alone, or, alternatively, together with suitable stabilizing media and other separation media, respectively.

Accordingly, a kit for carrying out FFE may comprise at least one of the volatile separation media described herein.

Kits for carrying out an FFE separation step may comprise at least one stabilizing medium in addition to one or more than one volatile separation media. Stabilizing media in the context of FFE applications are capable of stabilizing the electrochemical conditions (*e.g.* pH) within the separation space of an electrophoresis device, thereby preventing undesirable effects or artifacts, which may otherwise be observed during the electrophoretic separation process, particularly in FFE. As such, the use of stabilizing media affords an enhanced accuracy, sensitivity and reproducibility in the electrophoretic separation /fractionation of analytes in a sample.

The stabilizing medium may be a cathodic stabilizing medium or an anodic stabilizing medium. They are generally located between the anode/cathode and the separation medium, respectively. Stabilizing media are generally characterized by having an electrical conductivity that is higher than the conductivity in the separation medium. By virtue of its high electrical conductivity, the stabilizing medium prevents the analytes from being able to migrate all the way to the anode and cathode, respectively

The conductivity may be increased by a factor of 2, preferably a factor of 3 and most preferably a factor of greater than 3. The differences in conductivity between the separation media and the stabilizing media is achieved by adding further highly conductive ions to the stabilizing media or by increasing the concentration of the buffer compounds in the stabilizing media. Typical conductivity values observed in the stabilizing media are typically more than about 500 µS/cm, often more than about 1,000 or even 2,000 µS/cm, and may in certain cases even reach 10,000 or 20,000 µS/cm.

Although the electrical conductivity of the stabilizing media is higher than the conductivity of the separation media, the pH of the stabilizing media may be greater, nearly equal or even lower than the pH of the adjoining separation medium depending on the separation problem. Typically, however, the pH of the anodic stabilizing medium will be lower than that of the separation medium, and the pH of the cathodic stabilizing medium will be higher than that of the separation medium.

The buffer compounds of the stabilizing media can be identical with the buffer compounds of the separation media or can be different. Since the sample to be recovered from the FFE separation step will usually not enter the stabilizing medium due to the conductivity barrier formed by it, it is not absolutely necessary to employ volatile buffer compounds for the stabilizing media. It is nevertheless often convenient to use the same compounds in case fractions at or near the stabilizing medium shall be subjected to the downstream analysis by mass spectrometry. However, in case the buffer compounds employed for the stabilizing media are different from those employed for the (volatile) separation medium, the buffer acids in the anodic stabilizing medium should be stronger (i.e. having a lower pKa) than the buffer acids of the separation medium. Similarly, the buffer bases in the cathodic stabilizing medium should also be stronger (i.e. having a higher pKa) than the respective buffer bases of the separation medium. Moreover, the concentration of these buffer acids/bases should be sufficiently high in order to achieve the desired increased conductivity.

Since anodic and cathodic stabilization media will both be very useful for successful FFE, the kits used in the methods according to the present invention will comprise one cathodic or one anodic stabilizing medium as defined herein in addition to the volatile separation media described herein. The kits may comprise cathodic and/or anodic stabilizing media that are useful for ZE applications, or the kits may comprise cathodic and/or anodic stabilizing media useful for IEF applications.

It will be understood that a combination of the volatile buffer systems and MS-compatible zwitterionic or nonionic surfactants offers the advantage of notably reduced and/or simplified sample preparation prior to a downstream analysis subsequent to a free flow electrophoresis separation according to the present invention. Therefore, one embodiment is related to a method employing a kit, wherein at least one separation medium comprises at least one MS-compatible zwitterionic or nonionic surfactant as described herein.

Another embodiment is related to a method employing a kit, wherein at least one separation medium comprises at least one MS-compatible zwitterionic or nonionic surfactant that is a cleavable surfactant as described herein.

The kit may include all media required for a given electrophoretic separation, i.e., a cathodic and an anodic stabilization medium, as well as a separation medium (which may itself consist of several sub-fractions as explained above). In such embodiments, the volatile separation media and the stabilizing media will of course be selected so as to be useful for the intended operation mode, be it ZE or IEF.

The kit may comprise one or several of the separation media , and the additional media, such as stabilizing media and counter flow media, as one or more aqueous solutions that are ready to be used (i.e. all components are present in the desired concentration for the electrophoretic separation problem), or it may comprise one or several of the media in the form of a concentrated solution that is to be diluted with a pre-determined amount of solvent prior to their use. Alternatively, the kit may comprise one or several media in dry form or lyophilized form comprising the various ingredients of a medium in several, but preferably in one container, which is then reconstituted with a predetermined amount of solvent prior to its use in an electrophoretic separation process.

Preferably, each medium (separation medium, cathodic stabilizing medium, anodic stabilizing medium) will be present in a separate container, although it will be apparent to those of skill in the art that other combinations and packaging may be possible and useful in certain situations. For example, it has been mentioned above that the separation media for IEF applications may consist of a distinct number of "sub-fractions" having different concentrations of the ingredients (and thereby a different pH) in order to create a pre-formed pH gradient within the electrophoresis apparatus.

The pH of each separation medium used to form the gradient may be different. The number of sub-fractions employed in IEF applications will depend on the separation problem, the desired pH span achieved with the separation medium and the electrophoresis apparatus used for the separation. The pH of the separation media typically ranges between pH 2 and pH 13, although in most cases, particularly when working with samples of biological origin, the pH of the separation medium will most often range between pH 4 and pH 10. Those of skill in the art will understand that the pH gradient that can be created with the volatile buffer compounds , particularly when the separation medium is a binary medium comprising only one buffer acid and one buffer base, is often a bit narrower, e.g. from pH 4 to pH 9 or even from pH 4 to pH 8 or from pH 5 to pH 9.

In free flow electrophoresis applications, the apparatus will typically comprise several media inlets (e.g., N=7, 8 or 9 inlets), so that the sub-fractions creating the separation space within the apparatus may be introduced into at least one to a maximum of N-2 inlets (at least one inlet on each side is usually reserved for a stabilizing medium, if present). The number of separation media, which can be inserted into an apparatus suitable for FFE, is typically between 2 and 15, preferably between 3 and 12 and most preferably between 4 and 9. By introducing sub-fractions of the volatile separation media having an increasing pH from anode towards the cathode, it is generally possible to generate a so-called "pre-cast gradient" within the FFE apparatus.

The volatile separation media in the kit may represent binary media, comprising only one buffer acid and one buffer base as explained herein above. It is contemplated that all of the separation media and stabilizing media described herein, may be included in the kits.

Optionally, the kits employed in the methods of the present invention may further comprise instructions for the use of the media in electrophoretic applications.

It will be apparent to those of skill in the art that the volatile separation media, particularly in combination with the stabilizing media as described herein, are capable of providing excellent conditions for a successful separation of analytes by free flow electrophoresis, and offer the further advantage that the recovered samples can be directly, without a clean-up step, be employed in downstream applications because the buffer components employed for the FFE separation step can be conveniently removed by simple evaporation.

Some embodiments of the present invention are related to methods wherein cleavable MS-compatible zwitterionic or nonionic surfactants are present in a sample medium and/or a separation medium. It will be appreciated that the evaporation of volatile buffer compounds, and the removal of moieties derived from a cleavage of a MS-compatible cleavable surfactant by simple filtration, centrifugation or evaporation are not to be understood as such time consuming or detrimental clean-up or purification steps that can be avoided as described herein above.

### FFE Methods Comprising Volatile Separation Media

The method for separating analvtes by FFE comprising a volatile separation medium or a kit as described herein. typically comprises the steps of:
a) introducing analytes into an apparatus suitable for FFE comprising the volatile separation media ;
b) separating the analytes by FFE;
c) eluting the sample from the FFE apparatus, and optionally collecting at least a portion of the sample in a plurality of fractions.

The FFE separation described above is carried out to to produce a sample suitable for a subsequent downstream analytic method by mass spectrometry.

As indicated earlier herein, the FFE separation can be carried out with any of the volatile separation media, preferably in combination with the stabilizing media described herein. Thus, the FFE separation methods of embodiments of the present invention may be carried out in a convenient manner by employing the kits comprising the separation media, and optionally the stabilizing media discussed herein.

As discussed herein, the FFE separation method is principally capable of separating any analyte, including organic molecules, inorganic molecules, bioparticles, biopolymers or biomolecules having a sufficiently high solubility in the aqueous volatile separation media. Examples for analytes of biological origin that can be separated by the FFE separation method of embodiments of the present invention include proteins, protein aggregates, peptides, hormones, DNA-protein complexes such as chromatin, DNA, antibodies, cells, cell organelles, viruses or virus particles, membranes, membrane fragments, lipids, saccharides, polysaccharides, liposomes, nanoparticles or mixtures of any of the foregoing.

Particularly when the sample to be separated is of biological origin, for example comprised mainly of proteinaceous material, the FFE separation method may be performed under native conditions which do not disturb the structural integrity of the analytes. Moreover, it is well-known to those of skill in the art that most agents used for denaturing a sample during electrophoresis are known to be incompatible with downstream MS and must be removed prior to the analysis, thereby vitiating the advantages provided by the volatile separation media of embodiments of the present invention. Nevertheless, in certain embodiments, e.g., if the analyte of interest is a lipophilic protein, the method may be carried out in the presence of at least one MS-compatible zwitterionic or nonionic surfactant as described herein, offering the advantage that the surfactant does not need to be removed at all prior to a subsequent MS-analysis. In case the MS-compatible surfactant is a cleavable surfactant, resulting non-MS-compatible moieties of a cleaved surfactant can be easily removed by a simple centrifugation, filtration or evaporation step.

Generally, the invention relates to a method for analyzing analytes comprising an FFE separation and a subsequent downstream analysis of at least one analyte of interest by mass spectrometry (MS). Said downstream analysis of at least one fraction obtained from said FFE separation is selected from the group consisting of MALDI MS, ESI MS, SELDI MS, LC-MS(/MS), and MALDI-TOF-MS(/MS).

In practice, a method for analyzing analytes which comprises an FFE separation employing the volatile separation media as described herein that is carried out prior to a downstream analysis (i.e., mass spectrometric analysis) typically comprises the following steps::
a) separating analytes in a sample introduced into an apparatus suitable for free flow electrophoresis;
b) eluting the analyte(s) obtained from the FFE separation step into a multiplicity of fractions;
c) collecting at least one fraction containing the analyte(s) to be analyzed; and
d) subjecting at least one of the fractions to mass spectrometric analysis in absence of a clean-up or purification step.

By virtue of the volatility of the buffer compounds used for the FFE separation, no additional clean-up or purification steps to remove the volatile buffer compounds are necessary before carrying out an MS analysis. Therefore, the absence of a clean-up or purification step as used in this context means that a volatile buffer compound is merely removed by evaporation. In other words, this method avoids time consuming and potentially detrimental steps leading to a loss of the precious analyte such as, e.g., molecular weight cut-off filtration, dialysis, reversed phase chromatography or affinity chromatography, precipitation of the analyte (e.g., precipitation of proteins), liquid extraction or the use of ion pair reagents.

However, in certain embodiments, surfactant(s) might be present to, e.g., enhance the solubility of analytes of interest. In such embodiments, it is desirable that at least one surfactant is an MS-compatible zwitterionic or nonionic surfactant as described herein. Preferably, all surfactants comprised in at least one separation medium and/or at least one sample medium are MS-compatible zwitterionic or nonionic surfactants.

In particular, an MS-compatible zwitterionic or nonionic surfactant used in a method according to embodiments of the present invention may be a cleavable surfactant.

It will be understood that in the presence of at least one MS-compatible cleavable surfactant as described herein, it may be necessary to cleave said cleavable surfactant and subsequently remove a cleaved moiety by simple centrifugation, filtration or evaporation. Said aforementioned centrifugation, filtration or evaporation steps are not to be understood as time consuming and detrimental clean-up or purification steps to remove surfactants or moieties of surfactants as defined herein below.

In some embodiments, it is preferred that a method comprises the use of at least one counter-flow medium that comprises a cleaving agent. When said counter-flow medium comes in contact with and/or is mixed with a fraction of an FFE separation, e.g., within the separation chamber or during the elution of said fraction from the separation chamber, said counter-flow medium e.g., allows the cleavage of a cleavable surfactant directly subsequent to said FFE separation.

In some other embodiments, a method according the present invention may comprise the use of a counter-flow medium that adapts the medium conditions of at least one fraction of a FFE separation to conditions that stabilize a cleavable detergent that may be comprised in said fraction, i.e. a counter-flow medium is used to stabilize a cleavable surfactant comprised in at least one fraction after free flow electrophoretic separation. As a non-limiting example, such a stabilization may be achieved by adapting the pH of a solution, i.e. the pH of a fraction obtained from FFE may lead to decomposition of a cleavable detergent while the combined solution with the counter-flow medium is brought to a pH wherein the cleavable surfactant is essentially stable, i.e. a counter-flow medium is used to stabilize a cleavable surfactant comprised in at least one fraction after free flow electrophoretic separation.

In embodiments wherein the MS-compatible zwitterionic or nonionic surfactant is a cleavable surfactant, a cleavage of said cleavable surfactant results in at least two moieties that are either MS compatible and/or can be easily removed from a solution comprising an analyte of interest by filtration, centrifugation and/or evaporation. In other words, a method according to embodiments of the present invention does not require a purification step to remove surfactants or moieties of cleaved cleavable surfactants such as dialysis, chromatography, revered phase chromatography, ion exchange chromatography, surfactant exchange, protein precipitation, affinity chromatography, electro blotting liquid-liquid phase extraction, and/or solid-liquid phase extraction.

Regardless of the above, it is specifically contemplated herein that the downstream analysis methods according to the invention, i.e., mass spectrometric analysis) can nevertheless include additional steps, e.g., in order to effect a fragmentation of the analytes recovered from an FFE separation, but before the subsequent downstream analysis step. The fragmentation is typically carried out to reduce the molecular weight of an analyte in order to generate volatile fragments of said analyte or to generate a fragmentation pattern of an analyte to be identified or analyzed by means of MS. A fragmentation step can be chosen but is not limited to the group of physical fragmentation (bombarded by a high-energy electron beam), chemical fragmentation (e.g. weak acids for peptides) or digestion (e.g. by enzymes) of the analytes.

In certain embodiments, a method may further comprise a step of adding to at least one fraction from the FFE separation step an agent to reduce the molecular weight of the analytes to be analyzed by a downstream analysis such as MS. Particularly when the analyte(s) is (are) primarily protein(s) or peptide(s), the agent to reduce the molecular weight of the analyte might be a protease or a mixture of proteases. In other embodiments wherein a nucleotide(s) is (are) separated, the agent can be a nuclease or a mixture of nucleases.

Thus, at least a portion of the volatile buffer compounds and the solvent (i.e., water) are preferably removed from the collected portion of the sample to be analyzed by a MS downstream analysis by simple evaporation prior to said downstream analysis. The removal of at least a portion of the volatile buffer compounds and the solvent is carried out after the separation of analytes by FFE, but prior to their subsequent analysis. As a non-limiting example, a sufficient portion of the volatile buffer compounds and the solvent is removed to allow a valid interpretation of the resultant MS Spectra in a subsequent MS analysis. The portion of the volatile buffer compounds and the solvent removed can be at least 50%, 60%, 70%, 80%, 85%, 90%, 95%, 98%, 99%, or fully 100% (by mass) of the total volatile buffer compounds and the solvent. Advantageously, substantially all of the volatile buffer compounds and the solvent are removed after the separation of analytes by FFE, but prior to their subsequent MS downstream analysis. Many convenient methods to remove the solvent and the volatile buffer compounds are known to those of skill in the art and have also been described herein. For example, the removal can be achieved by, amongst others, vacuum centrifugation or by lyophilization. The sample may also be heated in order to facilitate the evaporation of the solvent and the volatile buffers.

Subsequent to an FFE separation, the mass spectrometric analysis step can be carried out to identify unknown compounds by the mass of the compound molecule or its fragments, to determine the isotopic composition of elements in a compound, to determine the structure of a compound by observing its fragmentation pattern, to quantify the amount of a compound in a sample, to study the fundamentals of gas phase ion chemistry (the chemistry of ions and neutrals in vacuum) or to determine other physical, chemical, or even biological properties of compounds in combination with a variety of other approaches.

Many different mass spectrometric methods exist in the art. The mass spectrometric method used in methods of the present invention is selected from electro spray ionization (ESI), matrix-assisted laser desorption/ionization (MALDI) or surface enhanced laser desorption ionization (SELDI). Both ESI and MALDI are particularly preferred mass spectrometric analysis techniques for proteomics applications.

In other embodiments, the volatile buffer compounds are removed by evaporation not before, but during a subsequent mass spectrometric analysis step. Again, no additional step to exchange or remove the volatile buffer compounds is required when using the volatile separation media described herein. Many MS methods operate under reduced pressure conditions which may be sufficient to achieve complete and residue free evaporation of the solvent and buffer compounds, leaving behind the pure sample and, optionally (for example in the case of MALDI), a compound serving as the matrix. It will be understood that the term matrix in the context of mass spectroscopy (MS) as used herein is different from the term "matrix" used in the context of electrophoresis (e.g., polyacrylamide or agarose). Therefore, in some embodiments wherein the downstream analysis is for example a MALDI application, a matrix component for MALDI analysis is added to the analyte buffer solution prior to mass spectrometric analysis.

In other embodiments, the separation medium employed in the FFE separation step already comprises at least one buffer compound which can act as a matrix for MALDI analysis and wherein further buffer compounds are volatile as defined herein.

In a certain embodiment of this aspect of the present invention wherein the FFE separation medium comprises volatile buffer compounds and the downstream MS analysis is MALDI, a method for mass spectrometric analysis of analytes comprising an FFE separation step prior to mass spectrometric analysis by MALDI comprises the steps of;
a) introducing analytes into an apparatus suitable for FFE comprising the volatile separation media ;
b) separating the analytes by FFE;
c) adding a matrix component for MALDI analysis to the collected analyte buffer solution;
d) removing at least a portion of the solvent and volatile buffer compounds; and
e) subjecting the dried matrix analyte mixture to MALDI analysis without further purification steps.

An alternative embodiment of this aspect of the invention relates to a method for mass spectrometric analysis of analytes comprising an FFE separation step prior to said mass spectrometric analysis, wherein the FFE separation medium comprises at least one buffer compound which can act as a matrix for MALDI analysis and wherein the other buffer compounds are volatile. Such an alternative method comprises the steps of;
a) introducing analytes into an apparatus suitable for FFE comprising the separation media ;
b) separating the analytes by FFE;
c) removing at least a portion of the solvent; and
d) subjecting the dried matrix / analyte mixture to MALDI analysis without subjecting the sample to any further clean-up or purification steps.

In order to be suitable as a MALDI matrix, the compound must meet a number of requirements simultaneously. It should be able to embed and isolate analytes (e.g., by co-crystallization), be soluble in solvents compatible with analyte, be vacuum stable, absorb the laser wavelength, cause co-desorption of the analyte upon laser irradiation, and promote analyte ionization. Compounds with labile protons, such as carboxylic acids, are known to be good MALDI matrix compounds in the positive ion mode because they are easily able to protonate neutral analyte molecules in the plume. However, an acidic environment is not always desirable, in particular if denaturation of the tertiary structure of biomolecules should be avoided. Therefore mostly nonacidic matrices are used for protein measurements.

Suitable matrix compounds for MALDI include, but are not limited to alpha-cyano-4-hydroxycinnamic acid, alpha-cyano-4-hydroxycinnamic acid diethylamine salt, alpha-cyano-4-hydroxycinnamic acid butylamine salt, sinapic acid, 2-(4-hydroxyphenylazo) benzoic acid (HABA), 2-mercapto-benzothiazole, succinic acid, 2,6-dihydroxy acetophenone, ferulic acid, caffeic acid, 4-nitroaniline, 2,4,6-trihydroxy acetophenone, 3-hydroxy picolinic acid, anthranilic acid, nicotinic acid, salicylamide, trans- 3-indoleacrylic acid, dithranol, 2,5-dihydroxy benzoic acid (DHB), isovanillin, and 3-aminoquinoline (depending on the analyte and the type of laser employed for the MALDI analysis).

While the methods provided herein are not limited to specific analytes, it will be appreciated that they are particularly suitable for the separation of inorganic, organic molecules, or of biological samples comprising bioparticles, biopolymers and biomolecules in view of the well-defined composition of the media and their easy reproducibility.

In all embodiments, , the FFE separation method can be performed either in continuous mode, in interval (also referred to as batch) mode, or in cyclic interval mode.

Embodiments of the present invention include FFE separation methods run in zone electrophoresis mode (FF-ZE). Other FFE separation methods are run in isoelectric focusing mode (FF-IEF). Yet other FFE separation methods are run in isotachophoresis mode (FF-ITP).

In certain embodiments, the FFE separation is carried out as FFE-IEF operated in continuous mode. The latter is particularly useful for a continuous injection of samples into the separation chamber of an FFE apparatus. In other, alternative embodiments, the FFE separation step is carried out as FFE-IEF operated in interval mode or in cyclic interval mode, as described hereinabove.

As will be apparent, the volatile buffer systems are suitable to perform an FFE separation. Nevertheless, it may be advantageous to combine the use of the volatile buffer systems provided herein with other non-volatile buffer systems such as a buffer system formed by commercial ampholytes, a binary buffer acid/buffer base system (A/B medium) as described in post-published WO 2008/087218 , or complementary multi pair buffer systems (CMPBS). A CMPBS is a buffer mixture comprised of carefully matched acids and bases such that the mixture may provide a smooth pH gradient when current flows through the buffer system. A mixture of low molecular weight organic acids and bases are chosen that enable an increased buffering capacity compared to commercially available high molecular weight ampholytes. These mixtures of carefully matched acids and bases are extremely well characterized in terms of molecular weight, pI, purity, and toxicity. Generally, the acids and bases have a smaller molecular weight than those of commercial ampholytes. Suitable complementary multi-pair buffer systems are known in the art. Specifically, a mixture with a pH range from 3 to 5 is sold as BD FFE Separation medium 1 while a mixture with a pH range from 5 to 8 is sold as BD FFE Separation medium 2 by BD GmbH Germany. These buffer systems have, for example, been described in general form in US patent application US 2004/0101973 and in EP 1 320 747.

The skilled person will understand that the use of such non-volatile buffer system media is limited to areas within the separation zone that do not contain the analyte(s) of interest after the separation, i.e. the analyte(s) of interest is(are) eluted from the separation zone in the volatile buffer medium .

This means that in the latter case a separation zone comprises at least two different buffer media types. Notably, the term "buffer type" as used herein relates to one type of a separation buffer medium that comprises a volatile buffer system, and to one type of a separation buffer medium that comprises a non-volatile buffer system, respectively. Thus, a separation buffer medium (SBM) type A as used herein refers to an SBM that comprises a volatile buffer system, and an SBM type B as used herein refers to an SBM that comprises a non-volatile buffer system. One SBM type A or several adjacent SBM type A may form a zone A, and one SBM type B or several adjacent SBM type B may form a zone B within a separation zone.

Accordingly, the present invention relates to a method comprising an FFE separation step that comprises:
forming between the electrodes of an apparatus suitable for free flow electrophoresis a separation zone that comprises a zone A formed by at least one separation buffer medium (SBM) type A, wherein the buffer system is a volatile buffer system, and a zone B formed by at least one separation buffer medium type B, wherein the buffer system is a non-volatile buffer system, between an anode and a cathode;
wherein said zone A is positioned in the separation zone so that at least one analyte of interest can be eluted from the separation zone in said zone A, i.e., the at least one analyte of interest is present in a SBM type A after the separation;
separating analytes in a sample introduced into said apparatus suitable for free flow electrophoresis; and
eluting at least one analyte of interest from the separation zone in a SBM type A.

In one embodiment, the sample is introduced into a zone A and at least one analyte of interest remains in said zone A, i.e. it elutes in SBM type A fraction(s). A non-limiting example is a free flow ITP separation wherein the sample is introduced into the spacer region which is a zone A that is surrounded by two zones B (see FIGs. 17 and 18).

In another embodiment, the sample is introduced into a zone B. and at least one analyte of interest is transferred into a zone A during FFE separation, i.e., at least one analyte of interest, preferably all analytes of interest, elutes from the separation zone in fractions formed by a SBM type A. A non-limiting example is a cyclic interval isoelectric focusing as outlined in FIG. 16. The sample is introduced into a SBM type B forming together with further SBM type B a zone B and the analyte of interest is transferred during the separation into a zone A and elutes from the separation chamber in a SBM type A.

A SBM type A may further comprise a MS-compatible zwitterionic or nonionic surfactant.

A SBM type B may comprise a buffer system selected from commercial ampholytes, a binary buffer acid/buffer base system (A/B medium) or a complementary multi pair buffer system (CMPBS).

Embodiments of the present invention and their advantages are further illustrated in the following, non-limiting examples.

### Examples

### EXAMPLE 1: Protein separation of human plasma under native conditions

The separation medium and stabilizing media were tested on a BD™ Free Flow Electrophoresis System in FF-IEF mode using a quality control solution. The apparatus was set up comprising nine media inlets (E1-E9) and four sample inlets (S1-S4). Anodic stabilizing medium was introduced into inlet E1. The cathodic stabilizing medium was introduced into inlet E9 and the sample was introduced via sample inlet S2. The total time of electrophoresis was approximately 10 minutes. The voltage applied was 500V and the current was 30 mA. The sample and the media were introduced at a flow rate of 1.5 ml/h and 120 ml/h, respectively.

Anodic stabilizing medium: 450 mM HAc, 225 mM TRIS (pH = 4.5; conductivity: 9080 µS/cm) (E1)

Cathodic stabilizing medium:, 225 mM HAc, 1148 mM TRIS (pH = 8,40; conductivity: 7730 µS/cm) (E9)

Separation medium:

| Media Inlet | E2 | E3 | E4 | E5 | E6 | E7 | E8 |
|---|---|---|---|---|---|---|---|
| Media | 150 mM HAc | 15 mM TRIS | 15 mM TRIS | 15mM TRIS | 15 mM HAc | 15 mM HAc | 100 mM HAc |
| | 25 mM TRIS | xmM HAc* | xmM HAc* | 15 mM HAc | x mM TRIS* | x mM TRIS* | x mM TRIS* |
| | 100 mM betaine | | | | | | 100 mM EACA |
| pH | 4.03 | 4.70 | 5.42 | 6.37 | 7.80 | 8.32 | 9.04 |
| Conductivity (µS/cm) | 1494 | 912 | 891 | 881 | 894 | 896 | 777 |

| | | | | | | | |
|---|---|---|---|---|---|---|---|
| *: Solutions were titrated to listed pH with either HAc or TRIS using a pH electrode to measure the pH. | | | | | | | |

The pH of each of the FFE fractions was determined using a pH electrode and is shown by the graph in FIG. 1. Colored pI-markers were separated to evaluate the separation performance of the system. The absorbance of the fraction at λ = 420 nm, 515 nm, and 595 nm which represent the absorbance of the respective pI-markers are also reported in FIG. 1.

Silver stained SDS-gels of several fractions showing the protein separation of the human plasma proteins are reported in FIG. 2.

### EXAMPLE 2: Native depletion of human serum albumin from human plasma

The separation medium and stabilizing media were tested on a BD™ Free Flow Electrophoresis System in FF-IEF mode using a quality control solution. The apparatus was set up comprising nine media inlets (E1-E9) and four sample inlets (S1-S4). Anodic stabilizing medium was introduced into inlet E1. The cathodic stabilizing medium was introduced into inlet E9 and the sample was introduced via sample inlet S2. The total time of electrophoresis was approximately 10 minutes. The voltage applied was 500V and the current was 31 mA. The sample and the media were introduced at a flow rate of 1.5 ml/h and 120 ml/h, respectively.

Anodic stabilizing medium: 450 mM HAc, 225 mM TRIS (pH = 4.5; conductivity: 9080 µS/cm) (E1;

Cathodic stabilizing medium: 225 mM HAc, 1148 mM TRIS (pH = 8,40; conductivity: 7730 µS/cm) (E9);

Separation medium:

| Media Inlet | E2 | E3 | E4 | E5 | E6 | E7 | E8 |
|---|---|---|---|---|---|---|---|
| Media | 150 mM HAc | 15 mM TRIS | 15 mM TRIS | 15 mM TRIS | 15 mM TRIS | 15 mM TRIS | 100 mM HAc |
| | 25 mM TRIS | xmM HAc* | x mM HAc* | 15 mM HAc | x mM HAc* | x mM HAc* | x mM TRIS* |
| | 100 mM betaine | | | | | | 100 mM EACA |
| pH | 4.03 | 4.43 | 4.71 | 4.84 | 5.03 | 6.06 | 7.47 |
| Conductivity (µS/cm) | 1494 | 904 | 901 | 895 | 899 | 881 | 3770 |

| | | | | | | | |
|---|---|---|---|---|---|---|---|
| *: Solutions were titrated to listed pH with either HAc or TRIS using a pH electrode to measure the pH. | | | | | | | |

The pH of each of the FFE fractions was determined using a pH electrode and is presented by the graph in FIG. 3. Colored pI-markers were separated to evaluate the separation performance of the system. The absorbance of the fraction at λ = 420 nm, 515 nm, and 595 nm which represent the absorbance of the respective pI-markers are reported in FIG. 5.

Silver stained SDS-gels of several fractions showing the protein separation of the human plasma proteins are reported in FIG. 4.

### EXAMPLE 3: FFE separation in cyclic interval mode

The separation medium and stabilizing media were tested on a BD™ Free Flow Electrophoresis System in FF-IEF mode using a quality control solution. The apparatus was set up comprising nine media inlets (E1-E9) and four sample inlets (S1-S4). Anodic stabilizing medium was introduced into inlet E1. The cathodic stabilizing medium was introduced into inlet E9 and the sample was introduced via sample inlet S2. The total time of electrophoresis was approximately 40 minutes. The voltage applied was 500V and the current was 30 mA. The sample and the media were introduced at a flow rate of 1.5 ml/h and 150 ml/h, respectively. The run was performed in cyclic interval FF-IEF mode at 50 ml/h and the fractionated sample was eluted at 150ml/h.

Anodic stabilizing medium: 450 mM HAc, 225 mM TRIS (pH = 4.54; conductivity: 9120 μS/cm) (E1);

Cathodic stabilizing medium: 225 mM HAc, 1148 mM TRIS (pH = 8,40; conductivity: 8040 μS/cm) (E9);

Separation medium:

| Media Inlet | E2 | E3 | E4 | E5 | E6 | E7 | E8 |
|---|---|---|---|---|---|---|---|
| Media | 150 mM HAc | 15 mM TRIS | 15 mM TRIS | 15 mM TRIS | 15 mM HAc | 15 mM HAc | 100 mM HAc |
| | 25 mM TRIS | x mM HAc* | x mM HAc* | 15 mM HAc* | x mM TRIS* | x mM TRIS* | x mM TRIS* |
| | 100 mM betaine | | | | | | 100 mM EACA |
| pH | 3.97 | 4.73 | 5.60 | 6.38 | 7.66 | 8.34 | 9.05 |
| Conductivity (μS/cm) | 1432 | 915 | 900 | 885 | 892 | 886 | 791 |

| | | | | | | | |
|---|---|---|---|---|---|---|---|
| *: Solutions were titrated to listed pH with either HAc or TRIS using a pH electrode to measure the pH. | | | | | | | |

The pH of each of the FFE fractions was determined using a pH electrode and is presented by the graph in FIG. 5. Colored pI-markers were separated to evaluate the separation performance of the system. The absorbance of the fraction at λ = 420 nm, 515 nm, and 595 nm which represent the absorbance of the respective pI-markers are reported in FIG. 5.

### EXAMPLE 4: Protein separation of digested HeLa cells followed by LC-MS/MS analysis

HeLa cells were digested according to the following enzymatic digestion protocol:
1. Add 200 mM TCEP solution to a final concentration of 5 mM. Incubate for 60 min at room temperature. Add 200 mM iodoacetamide to a concentration of 15 mM and incubate for 60 min in the dark.
2. Adjust pH to 7.8 with 100 mM ammonium bicarbonate.
3. Add trypsin to a enzyme protein ratio of 1:37.5 and incubate minimum 4 hours at 37 °C.
4. Acidify solution with 0.1 % trifluoracetic acid (TFA) to terminate the digestion process.
5. Purify the generated peptides using a SepPak™ C18 reversed phase cartridge: Equilibrate cartridge with two times 1 mL acetonitrile and additional two times 1 mL 0.1 % TFA. Load sample. Wash two times using 1 mL 0.1 % TFA. Elute peptides into a microcentrifuge tube using 400 µL 70 % acetonitrile.
6. Evaporate sample to dryness using vacuum centrifugation and reconstitute in FFE separation medium.

The separation medium and stabilizing media were tested on a BD™ Free Flow Electrophoresis System in FF-IEF mode using a quality control solution. The apparatus was set up comprising nine media inlets (E1-E9) and four sample inlets (S1-S4). Anodic stabilizing medium was introduced into inlet E1. The cathodic stabilizing medium was introduced into inlet E9 and the sample was introduced via sample inlet S2. The total time of electrophoresis was approximately 10 minutes. The voltage applied was 550V and the current was 112 mA. The sample and the media were introduced at a flow rate of 2.5 ml/h and 150 ml/h, respectively.

Anodic stabilizing media: 1567 mM HAc, 450 mM TRIS (pH = 4.09; conductivity: 6550 μS/cm) (E1);

Cathodic stabilizing medium: 450 mM HAc, 900 mM TRIS (pH = 8.35; conductivity: 8360 μS/cm) (E9);

Separation medium: 150 mM HAc, 25 mM TRIS, 100 mM betaine (pH = 3.98; conductivity: 1563 μS/cm) (E2); 10 mM TRIS + 300 μl HAc in 300 ml (pH = 4.85; conductivity = 622 μS/cm) (E3-E5); 10 mM HAc + 260 mg TRIS in 200 ml (pH = 6.4, conductivity = 667 μS/cm) (E6-E7); 150 mM HAc, 150 mM TRIS + 560 mg TRIS in 100 ml (pH = 7.82; conductivity: 6730 μS/cm) (E8);

The pH of each of the FFE fractions was determined using a pH electrode and is presented by the graph in FIG. 6. Colored pI-markers were separated to evaluate the separation performance of the system. The absorbance of the fraction at λ = 420 nm, 515 nm, and 595 nm which represent the absorbance of the respective pI-markers are reported in FIG. 6.

Fraction 42 was collected and subsequently subjected to LC-MS/MS analysis without any further clean-up step. 100 μl of the collected FFE fraction was evaporated to dryness using a SpeedVac and dissolved in 25 μl 0.1 % TFA. A volume of 5 μl was used for the LC-MS/MS experiment. ESI based LC-MS/MS (HCTultra, Bruker, Bremen, Germany) analyses were carried out using an Agilent 1100 series NanoPump (Agilent Technologies, Waldbronn, Germany) on a 75 μm x 15 cm fused silica microcapillary reversed phase column (Agilent). The sample volume was loaded onto the pre-column (300 μm x 0.5 cm reversed phase (C18) column from Agilent) at a flow rate of 10 μl/min for 5 min using a microflow CapPump (Agilent). After sample loading, the sample was separated and analyzed at a 200 nl/min flow rate with a gradient of 2 % B to 40 % B over 30 minutes. The column was directly coupled to the spray needle from New Objective (Woburn, MA, USA). Mobile phase A was 0.1 % formic acid and mobile phase B was 100 % acetonitrile. Peptides eluting from the capillary column were selected for CID by the mass spectrometer using a protocol that alternated between one MS scan (300-1500 m/z) and three MS/MS scans. The three most abundant precursor ions in each survey scan were selected for CID, if the intensity of the precursor ion peak exceeded 10000 ion counts. The electrospray voltage was set to 1.8 kV and the specific m/z value of the peptide fragmented by CID was excluded from reanalysis for 2 min. A Base Peak Chromatogram obtained from the LC-MS/MS experiment is shown in FIG. 7. Each MS/MS spectrum was searched against the IPI Human database, release no. 3.18. The list of proteins identified from FFE fraction 42 is shown in Table 1.

**TABLE 1**

| **Protein identified by LC-MS/MS analysis of FFE fraction 42** |
|---|
| Isoform 1 of Heat shock cognate 71 kDa protein |
| heat shock 70kDa protein 1A |
| Hypothetical protein |
| Stress-70 protein, mitochondrial precursor |
| Filamin A, alpha |
| Actin, cytoplasmic 1 |
| Cofilin-1 |
| Isoform 1 of Carbamoyl-phosphate synthase |
| eukaryotic translation initiation factor 4B |
| Glucose-6-phosphate isomerase |
| Ubiquitin-activating enzyme E1 |
| Isoform M1 of Pyruvate kinase isozymes M 1/M2 |
| Elongation factor 1-delta |
| Fructose-bisphosphate aldolase A |
| Thioredoxin-like protein 5 |
| lactate dehydrogenase A |
| Fascin |
| Tubulin beta-2 chain |
| Chloride intracellular channel protein 1 |
| Multifunctional protein ADE2 |
| OTTHUMP00000021786 |
| Transketolase |
| 14-3-3 protein zeta/delta |
| Alpha-actinin-1 |
| ubiquitin and ribosomal protein S27a precursor |
| Pyruvate dehydrogenase E1 component alpha subunit |
| poly(rC)-binding protein 2 isoform b |
| Elongation factor 1-gamma |
| PREDICTED: similar to peptidylprolyl isomerase A |
| Transportin-1 |
| Nucleoside diphosphate kinase A |
| 6-phosphogluconate dehydrosenase, decarboxylatin |
| Heat shock 70 kDa protein 4 |
| Small glutamine-rich tetratricopeptide |
| Alpha-actinin-4 |
| heterogeneous nuclear ribonucleoprotein A1 |
| Brain acid soluble protein 1 |
| Importin beta-1 subunit |
| Isoform 1 of Nuclear autoantigenic sperm protein |
| Heat shock protein 60 |
| Isoform 1 of Serpin B13 |
| 116 kDa U5 small nuclear ribonucleoprotein component |
| T-complex protein 1 subunit beta |
| hypothetical protein LOC64423 isoform 1 |
| Protein S100-A11 |
| UV excision repair protein RAD23 homolog B |
| hematological and neurological expressed 1 isoform |
| PREDICTED: similar to ribosomal protein S3a isoform |

### EXAMPLE 5: FFE separation followed by MALDI-TOF analysis of human plasma [3951]

The separation medium and stabilizing media were tested on a BD™ Free Flow Electrophoresis System in FF-IEF mode using a quality control solution. The apparatus was set up comprising nine media inlets (E1-E9) and four sample inlets (S1-S4). Anodic stabilizing medium was introduced into inlet E1. The cathodic stabilizing medium was introduced into inlet E9 and the sample was introduced via sample inlet S2. The total time of electrophoresis was approximately 10 minutes. The voltage applied was 500V and the current was 81 mA. The sample and the media were introduced at a flow rate of 3.0 ml/h and 150 ml/h, respectively.

Anodic stabilizing media: 1567 mM HAc, 450 mM TRIS (pH = 4.09; conductivity: 8880 µS/cm) (E1);

Cathodic stabilizing medium: 450 mM HAc, 900 mM TRIS (pH = 8.32; conductivity: 8360 µS/cm) (E9);

Separation medium: 150 mM HAc, 25 mM TRIS, 100 mM betaine (pH = 3.94; conductivity: 1456 µS/cm) (E2);10 mM TRIS + 300 µl HAc in 300 ml (pH = 4.85; conductivity = 630 µS/cm) (E3-E5); 10 mM HAc + 230 mg TRIS in 200 ml (pH = 6.42, conductivity = 603 µS/cm) (E6-E7); 150 mM HAc, 150 mM TRIS + 560 mg TRIS in 100 ml (pH = 7.82; conductivity: 6800 µS/cm) (E8);

The pH of each of the FFE fractions was determined using a pH electrode and is presented by the graphs in FIG. 8. Colored pI-markers were separated to evaluate the separation performance of the system. The absorbance of each fraction at λ=420nm, 515nm and 595nm which represent the absorbance of the respective pI-markers are reported in FIG. 8.

Silver stained SDS-gels of several fractions showing the protein separation of the human plasma proteins are reported in FIG. 9. A MALDI-TOF spectrum of fraction 53 is disclosed in FIG. 10. A number of peaks over a broad mass range, each representing individual proteins, could be identified in the spectrum. Most likely some of the peaks originate from the protein adiponectin with a monomeric mass of approximately 28kDa.

### EXAMPLE 6: FFE separation of lyophilized wasp protein extract under native conditions [4176p3]

The separation medium and stabilizing media were tested on a BD™ Free Flow Electrophoresis System in FF-IEF mode using a quality control solution. The apparatus was set up comprising nine media inlets (E1-E9) and four sample inlets (S1-S4). Anodic stabilizing medium was introduced into inlet E1. The cathodic stabilizing medium was introduced into inlet E9 and the sample was introduced via sample inlet S3. The total time of electrophoresis was approximately 10 minutes. The voltage applied was 550V and the current was 85 mA. The sample and the media were introduced at a flow rate of 1.5 ml/h and 150 ml/h, respectively.

Anodic stabilizing medium: 100 mM DEA, 46 mM picolinic acid (pH = 6.0; conductivity: 4350 μS/cm) (E1);

Cathodic stabilizing medium: 149 mM DEA, 100 mM picolinic acid (pH = 9,50; conductivity: 3850 μS/cm) (E8+E9);

Separation medium:

| Media Inlet | E2 | E3 | E4 | E5 | E6 | E7 |
|---|---|---|---|---|---|---|
| Media | 10 mM DEA | 10 mM DEA | xmM DEA* | xmM DEA* | xmM DEA* | xmM DEA* |
| | 4,6 mM picolinic acid | xmM picolinic acid* | 10 mM picolinic acid | 10 mM picolinic acid | 10 mM picolinic acid | 10 mM picolinic acid |
| pH | 6.0 | 7,0 | 7,8 | 8,5 | 9,2 | 9,5 |
| Conductivity (μS/cm) | 550 | 574 | 589 | 592 | 599 | 597 |

| | | | | | | |
|---|---|---|---|---|---|---|
| *: Solutions were titrated to listed pH with either DEA or picolinic acid using a pH electrode to measure the pH. | | | | | | |

The pH of each of the FFE fractions was determined using a pH electrode and is presented by the graph in FIG. 11. Colored pI-markers were separated to evaluate the separation performance of the system. The absorbance of the fraction at λ = 420 nm, 515 nm, and 595 nm which represent the absorbance of the respective pI-markers are reported in FIG. 11.

Silver stained SDS-gels of several fractions showing the protein separation of the lyophilized wasp proteins are reported in FIG. 12.

### EXAMPLE 7: Separation of serum from python sebae with and without PPS

Serum was taken from python sebae. The serum sample was diluted 1:10 in the separation medium. The separation medium contained only buffer components that are well known to be compatible with MALDI-TOF. In addition, one experiment was performed adding PPS, a MALDI-TOF compatible cleavable detergent, to the sample as well as the separation medium.

The separation of the sample was carried out on a BD™ Free Flow Electrophoresis System in free-flow isoelectric focusing (FF-IEF) mode. The apparatus was set up comprising nine media inlets (E1-E9) and four sample inlets (S1-S4). Anodic stabilizing medium was introduced into inlet E1. The cathodic stabilizing medium was introduced into inlet E9 and the sample was introduced via sample inlet S2. The voltage applied was 550V and the current was 105 mA. The sample and the media were introduced at a flow rate of 2 ml/h and 150 ml/h, respectively.

Separation and stabilizing media within the FFE apparatus:

| Media inlet | E2 | E3 | E4 | E5 | E6 | E7 | E8 |
|---|---|---|---|---|---|---|---|
| Media | 150 mM HAc / 25 mM Tris / 100 mM betaine | 300 ml 10 mM Tris / 300 μl HAc | | | 200 ml 10 mM HAc / 260 mg Tris | | 100 ml 150 mM HAc / 150 mM Tris / 560 mg Tris |
| pH | 3.95 | 4.85 | | | 7.08 | | 7.78 |
| Conductivity / [µS/cm] | 1475 | 622 | | | 611 | | 6800 |

Anodic stabilizing medium: 1567 mM HAc / 450 mM Tris (pH = 4.11; conductivity: 6610 µS/cm) (E1)

Cathodic stabilizing medium: 450 mM HAc, 900 mM TRIS (pH = 8.23; conductivity: 6220 µS/cm) (E9)

Counter flow medium: Water (CF1-CF3)

The above described separation media are volatile separation media, i.e. the buffer compounds are either MS-compatible or can be removed by evaporation prior to an MS-analysis.

96 fractions were collected in each of the two experiments. 0.2 mL were taken of each fraction for an SDS-PAGE. The SDS-PAGE gel images (silver stained) of every second fraction of the separated samples (one sample with, one sample without PPS) are shown in Figure 13.

Although the separation pattern look quite similar, some precipitation was observed in the separation chamber without detergent in the separation medium. This was significantly less pronounced using 0.1 % PPS in the separation medium.

The separation media were completely free of glycerol and other components that are known to interfere with the MALDI-TOF measurements. The fraction obtained from the FFE experiment can therefore be applied directly onto the MALDI target. A mass spectrum of the 25 kDa protein of fraction 26 is shown in Figure 14.

### EXAMPLE 8: Interval FFE-ITP separation using a volatile buffer system A and a non-volatile buffer system B

The separation medium and stabilizing media were tested on a BD™ Free Flow Electrophoresis System in FF-IEF mode using a quality control solution. The apparatus was set up comprising nine media inlets (E1-E8) and four sample inlets (S1-S4). Anodic stabilizing medium was introduced into inlet E1. The cathodic stabilizing medium was introduced into inlet E8 and the sample was introduced via a sample inlet into the spacer region. The FFE-ITP was performed according to a modified ITP protocol as disclosed in PCT/EP2007/061840 which is hereby incorporated in its entirety. The total time of electrophoresis was approximately 25 minutes. The voltage applied was 500V and the current was set to 20 mA. The sample and the media were introduced at a flow rate of 1.5 ml/h and 150 ml/h, respectively. The run was performed in interval FF-ITP mode at 80 ml/h and the fractionated sample was eluted at 150ml/h.

A stabilized leader containing 100 mM HCl, 200 mM iso-nicotinic acid amide (pH = 3.40; conductivity: 8060 µS/cm) was introduced into inlet E1. A less concentrated leader of HCl (10 mM) and iso-nicotinic acid amide (20 mM) was introduced into inlets E2 through E5. A volatile spacer composition comprising 6 mM formic acid, 8 mM acetic acid, 8 mM propionic acid, 6 mM butyric acid, 6 mM pivalic acid and the 34 mM e-aminocaproic. acid (EACA) and 34mM Pyridinethanol (pH 5.26) was introduced into inlet E6. A diluted terminator comprising NaOH (10 mM) and 4-pyridineethanesulfonic acid (PES) (20 mM) was introduced into inlet E7, and a non-diluted terminator comprising NaOH (100 mM) and After electrophoretic separation, the sample and media were eluted into fraction collectors and the fractions were analyzed.

The pH of each of the FFE fractions was determined using a pH electrode and is presented by the graph in FIG. 15. Colored pI-markers were separated to evaluate the separation performance of the system. The absorbance of the fraction at λ = 420 nm, 515 nm, and 595 nm which represent the absorbance of the respective pI-markers are reported in FIG. 15. The figure shows a separation of the pI markers within the spacer zone.

## Claims

1. A method for analyzing analytes comprising
a) a separation of analytes by free flow electrophoresis (FFE) comprising an aqueous separation medium for separating analytes by free flow electrophoresis comprising at least one buffer acid and at least one buffer base, wherein each of the buffer acids and buffer bases is volatile under mass spectroscopy working conditions,
optionally wherein the separation medium is provided in the form of a kit; and
b) a subsequent downstream analysis of at least one analyte of interest obtained from said FFE separation step a),
**characterised in that** said downstream analysis is mass spectrometric analysis selected from the group consisting of electrospray ionization (ESI), surface-enhanced laser desorption /ionization (SELDI), matrix-assisted laser desorption/ionization (MALDI or MALDI-TOF-MS(/MS)) and LC-MS(/MS).

2. The method according to claim 1, wherein the medium is a binary medium comprising only one buffer acid and one buffer base; and, optionally,
wherein the at least one buffer acid is selected from the group consisting of formic acid, acetic acid, picolinic acid, diacetylacetone, o-, m- and p-cresols, o-, m-, p-chlorophenols, hydroxy-pyridines, fluorinated alcohols and carbonyl compounds such as trifluoroethanol, tetrafluoropropanol, tetrafluoroacetone, and/or
wherein the at least one buffer base is selected from the group consisting of TRIS, hydroxy pyridines, isonicotinic acid amide, pyridine carbinols, diethanolamine, benzylamine, pyridinethanol and dimethylaminopropionitril.

3. The method according to claim 1 or claim 2, wherein the separation medium is substantially free of HPMC, urea, glycerol, and/or PEGs.

4. The method according to any one of claims 1 to 3, wherein the separation of the analytes by free flow electrophoresis is performed under native conditions.

5. The method according to any one of claims 1 to 4, wherein at least one separation medium and/or a sample comprises at least one MS-compatible zwitterionic or nonionic surfactant; preferably
wherein said at least one MS-compatible zwitterionic or nonionic surfactant is a cleavable surfactant.

6. The method according to claim 5, wherein at least one MS-compatible zwitterionic or nonionic surfactant is a cleavable surfactant and wherein a counter-flow medium which comprises a cleaving agent comes in contact with and/or is mixed with a fraction that comprises a cleavable surfactant and at least part of a sample after electrophoretic separation; or
wherein a counter-flow medium is used to stabilize a cleavable surfactant comprised in at least one fraction after free flow electrophoretic separation,
and, optionally, wherein a moiety of a cleaved cleavable surfactant is removed by filtration, centrifugation or evaporation.

7. The method according to any one of claims 1 to 6, wherein the method comprises:
forming between the electrodes of an apparatus suitable for free flow electrophoresis a separation zone that comprises a zone A formed by at least one separation buffer medium (SBM) type A, wherein said SBM type A is a volatile separation medium as defined in any one of claims 1 to 6, and a zone B formed by at least one separation buffer medium type B, wherein the buffer system is a non-volatile buffer system, between an anode and a cathode;
wherein said zone A is positioned in the separation zone so that at least one analyte of interest can be eluted from the separation zone in said zone A;
separating analytes in a sample introduced into said apparatus suitable for free flow electrophoresis; and
eluting at least one analyte of interest from the separation zone in a SBM type A.

8. The method according to claim 7, wherein the sample is introduced into said apparatus into a zone A or into a zone B; and wherein all analytes of interest are eluted from the separation zone in a SBM type A;
optionally, wherein said SBM type A comprises at least one MS-compatible zwitterionic or nonionic surfactant and wherein at least one SBM type B comprises a buffer system selected from commercial ampholytes, a binary buffer acid/buffer base system (A/B medium) or a complementary multi pair buffer system (CMPBS).

9. The method according to any one of claims 1 to 8, wherein said method comprises the steps of
a) separating analytes in a sample introduced into an apparatus suitable for free flow electrophoresis;
b) eluting the analyte(s) obtained from the FFE separation step into a multiplicity of fractions;
c) collecting at least one fraction containing the analyte(s) to be analyzed; and
d) subjecting at least one of the fractions to said downstream analysis wherein said fraction does not require a clean-up or purification step prior to said downstream analysis.

10. The method according to claim 9, wherein said downstream analysis is matrix-assisted laser desorption/ionization (MALDI) mass spectroscopy, and
i) wherein a matrix component for MALDI analysis is added to the collected analyte buffer solution prior to mass spectrometric analysis; or
ii) wherein the separation medium employed in the FFE separation step comprises at least one buffer compound which can act as a matrix for MALDI analysis and wherein further buffer compounds are volatile under MALDI mass spectroscopy working conditions; or
iii) wherein a matrix component for MALDI analysis is added to the collected analyte buffer solution prior to mass spectrometric analysis and wherein the separation medium employed in the FFE separation step comprises at least one buffer compound which can act as a matrix for MALDI analysis and wherein further buffer compounds are volatile under MALDI mass spectroscopy working conditions.

11. The method according to claim 9 or claim 10, further comprising the step of adding to at least one fraction from the FFE separation step an agent to reduce the molecular weight of the analytes to be analyzed by said downstream analysis; preferably wherein the analyte(s) is (are) primarily protein(s) or peptide(s), and wherein the agent to reduce the molecular weight of the analyte(s) is a protease or a mixture of proteases; or
wherein the analyte(s) is a (are) nucleotide(s), and wherein the agent to reduce the molecular weight of the analyte(s) is a nuclease or a mixture of nucleases.

12. The method according to any one of claims 9 to 12, further comprising the step of removing at least a portion of the solvent and the volatile buffer compounds prior to said downstream analysis; preferably
wherein the removal is achieved by vacuum centrifugation or by lyophilization.

13. The method according to any one of claims 9 to 12, wherein said method is carried out without a purification step to remove surfactants or moieties of cleaved cleavable surfactants selected from the group consisting of dialysis, chromatography, reversed phase chromatography, ion exchange chromatography, surfactant exchange, protein precipitation, affinity chromatography, electro blotting liquid-liquid phase extraction, solid-liquid phase extraction and combinations thereof.

14. The method according to any one of claims 9 to 13, wherein at least one buffer acid of the separation medium is acetic acid; or
wherein at least one buffer base of the separation medium is TRIS; or
wherein the separation medium comprises a binary buffer system of acetic acid and TRIS; preferably
wherein the concentrations of acetic acid and TRIS are individually chosen from about 1 mM to about 200 mM, preferably from about 2 mM to about 100 mM, and most preferably from about 5 to about 50 mM.

15. The method according to any one of claims 1 to 14, wherein the analytes to be separated by said FFE step and analyzed by said downstream analysis are bioparticles, biopolymers or biomolecules; preferably
wherein the bioparticles, biopolymers or biomolecules to be separated and analyzed are selected from the group consisting of proteins, protein aggregates, peptides, hormones, DNA-protein complexes such as chromatin, DNA, antibodies, cells, cell organelles, viruses or virus particles, membranes, membrane fragments, lipids, saccharides, polysaccharides, liposomes, nanoparticles and mixtures thereof.

16. The method according to any one of claims 1 to 15, wherein the separation of the analytes is achieved by free flow isoelectric focusing (FF-IEF), free flow isotachophoresis (FF-ITP) or free flow zone electrophoresis (FF-ZE).

## Patentansprüche

1. Verfahren zur Analyse von Analyten umfassend
a) eine Trennung von Analyten durch Freiflusselektrophorese (FFE) umfassend ein wässriges Trennmedium zum Trennen von Analyten durch Freiflusselektrophorese umfassend mindestens eine Puffersäure und mindestens eine Pufferbase, wobei die Puffersäuren und die Pufferbasen jeweils bei Massenspektroskopie-Arbeitsbedingungen flüchtig sind,
gegebenenfalls wobei das Trennmedium in der Form von einem Kit bereitgestellt wird; und
b) eine spätere nachgeschaltete Analyse von mindestens einem Analyten von Interesse, der aus dem FFE-Trennschritt a) erhalten wird,
**dadurch gekennzeichnet, dass**
die nachgeschaltete Analyse eine massenspektrometrische Analyse ist, ausgewählt aus der Gruppe bestehend aus Elektrospray-Ionisation (ESI), Oberflächen-verstärkter Laser-Desorption/Ionisation (SELDI), Matrix-unterstützter Laser-Desorption/Ionisation (MALDI oder MALDI-TOF-MS(/MS) und LC-MS(/MS).

2. Verfahren nach Anspruch 1, wobei das Medium ein binäres Medium ist, umfassend nur eine Puffersäure und eine Pufferbase; und gegebenenfalls
wobei die mindestens eine Puffersäure aus der Gruppe ausgewählt ist, bestehend aus Ameisensäure, Essigsäure, Picolinsäure, Diacetylaceton, o-, m- und p-Cresolen, o-, mund p-Chlorphenolen, Hydroxypyridinen, fluorierten Alkoholen und Carbonylverbindungen, wie Trifluorethanol, Tetrafluorpropanol, Tetrafluoraceton und/oder
wobei die mindestens eine Pufferbase aus der Gruppe ausgewählt ist bestehend aus TRIS, Hydroxypyridinen, Isonicotinsäureamid, Pyridincarbinolen, Diethanolamin, Benzylamin, Pyridinethanol und Dimethylaminopropionitril.

3. Verfahren nach Anspruch 1 oder Anspruch 2, wobei das Trennmedium im Wesentlichen frei ist von HPMC, Harnstoff, Glycerin, und/oder PEGs.

4. Verfahren nach einem der Ansprüche 1 bis 3, wobei die Trennung der Analyten durch Freiflusselektrophorese unter nativen Bedingungen durchgeführt wird.

5. Verfahren nach einem der Ansprüche 1 bis 4, wobei mindestens ein Trennmedium und/oder eine Probe mindestens ein MS-kompatibles zwitterionisches oder nichtionisches grenzflächenaktives Mittel umfasst; vorzugsweise
wobei das mindestens eine MS-kompatible zwitterionische oder nichtionische grenzflächenaktive Mittel ein spaltbares grenzflächenaktives Mittel ist.

6. Verfahren nach Anspruch 5, wobei mindestens ein MS-kompatibles zwitterionisches oder nichtionisches grenzflächenaktives Mittel ein spaltbares grenzflächenaktives Mittel ist und wobei ein Gegenstrommedium, welches ein Spaltungsmittel umfasst, mit einer Fraktion, die ein spaltbares grenzflächenaktives Mittel und mindestens einen Teil einer Probe nach elektrophoretischer Trennung umfasst, in Kontakt kommt und/oder damit gemischt wird; oder
wobei ein Gegenstrommedium zur Stabilisierung eines spaltbaren grenzflächenaktiven Mittels verwendet wird, das nach der Freiflusselektrophorese-Trennung in mindestens einer Fraktion mit umfasst ist,
und gegebenenfalls wobei ein Teil von einem abgespaltenen spaltbaren grenzflächenaktiven Mittel durch Filtration, Zentrifugation oder Verdunsten entfernt wird.

7. Verfahren nach einem der Ansprüche 1 bis 6, wobei das Verfahren umfasst:
Bilden zwischen den Elektroden von einem Gerät, das für die Freiflusselektrophorese geeignet ist, von einer Trennzone, umfassend eine Zone A, die von mindestens einem Trennpuffermedium (SBM) Typ A gebildet wird, wobei der SBM-Typ A ein flüchtiges Trennmedium ist, wie in einem der Ansprüche 1 bis 6 definiert, und eine Zone B, die von mindestens einem Trennpuffermedium Typ B gebildet wird, wobei das Puffersystem ein nichtflüchtiges Puffersystem ist, zwischen einer Anode und einer Kathode;
wobei die Zone A in der Trennzone positioniert ist, so dass mindestens ein Analyt von Interesse aus der Trennzone in der Zone A eluiert werden kann;
Trennen von Analyten in einer Probe, die in das zur Freiflusselektrophorese geeignete Gerät eingebracht wird; und
Eluieren von mindestens einem Analyten von Interesse aus der Trennzone in einem SBM-Typ A.

8. Verfahren nach Anspruch 7, wobei die Probe in das Gerät in eine Zone A oder in eine Zone B eingebracht wird; und wobei alle Analyten von Interesse aus der Trennzone in einem SBM-Typ A eluiert werden;
wobei der SBM-Typ A gegebenenfalls mindestens ein MS-kompatibles zwitterionisches oder nichtionisches grenzflächenaktives Mittel umfasst und wobei mindestens ein SBM-Typ B ein Puffersystem umfasst, das aus handelsüblichen Ampholyten, einem binären Puffersäure/Pufferbase-System (A/B-Medium) oder einem komplementären mehrpaarigen Puffersystem (CMPBS) ausgewählt ist.

9. Verfahren nach einem der Ansprüche 1 bis 8, wobei das Verfahren die folgenden Schritte umfasst
a) Trennen von Analyten in einer Probe, die in ein zur Freiflusselektrophorese geeignetes Gerät eingebracht wird;
b) Eluieren des (der) Analyten, die aus dem FFE-Trennschritt erhalten wurden, in eine Vielzahl von Fraktionen;
c) Sammeln von mindestens einer Fraktion, die den/die zu analysierenden Analyten enthält; und
d) Unterziehen von mindestens einer der Fraktionen der nachgeschalteten Analyse, wobei die Fraktion keinen Aufreinigungs- oder Reinigungsschritt vor der nachgeschalteten Analyse erfordert.

10. Verfahren nach Anspruch 9, wobei die nachgeschaltete Analyse Matrix-unterstützte Laser-Desorption/Ionisation (MALDI)-Massenspektroskopie ist, und
i) wobei der gesammelten Analyt-Pufferlösung eine Matrixkomponente für die MALDI-Analyse vor der Massenspektroskopie-Analyse zugesetzt wird; oder
ii) wobei das bei dem FFE-Trennschritt eingesetzte Trennmedium mindestens eine Pufferverbindung umfasst, die als eine Matrix für die MALDI-Analyse wirken kann, und wobei weitere Pufferverbindungen unter MALDI-Massenspektroskopie-Arbeitsbedingungen flüchtig sind; oder
iii) wobei eine Matrix-Komponente für die MALDI-Analyse der gesammelten Analyt-Pufferlösung vor der massenspektrometrischen Analyse zugesetzt wird und wobei das bei dem FFE-Trennschritt eingesetzte Trennmedium mindestens eine Pufferverbindung umfasst, die als eine Matrix für die MALDI-Analyse wirken kann, und wobei weitere Pufferverbindungen unter MALDI-Massenspektroskopie-Arbeitsbedingungen flüchtig sind.

11. Verfahren nach Anspruch 9 oder Anspruch 10, weiterhin umfassend den Schritt des Zugebens zu mindestens einer Fraktion aus dem FFE-Trennschritt von einem Mittel, um das Molekulargewicht der durch die nachgeschaltete Analyse zu analysierenden Analyten zu reduzieren; vorzugsweise, wobei der (die) Analyt(en) hauptsächlich Protein(e) oder Peptid(e) ist (sind), und wobei das Mittel zur Reduktion des Molekulargewichts des (der) Analyten eine Protease oder ein Gemisch von Proteasen ist; oder
wobei der (die) Analyt(en) Nukleotid(e) ist (sind), und wobei das Mittel zur Reduktion des Molekulargewichts des (der) Analyten eine Nuklease oder ein Gemisch von Nukleasen ist.

12. Verfahren nach einem der Ansprüche 9 bis 12, weiterhin umfassend den Schritt des Entfernens von mindestens einem Teil des Lösungsmittels und der flüchtigen Pufferverbindungen vor der nachgeschalteten Analyse; vorzugsweise wobei die Entfernung durch Vakuumzentrifugation oder durch Lyophilisation erreicht wird.

13. Verfahren nach einem der Ansprüche 9 bis 12, wobei das Verfahren ohne einen Reinigungsschritt durchgeführt wird, um grenzflächenaktive Mittel oder Teile von gespaltenen spaltbaren grenzflächenaktiven Mitteln zu entfernen, die aus der Gruppe ausgewählt sind bestehend aus Dialyse, Chromatographie, Umkehrphasenchromatographie, Ionenaustauscherchromatographie, Austausch von grenzflächenaktivem Mittel, Protein-Präzipitation, Affinitätschromatographie, Elektroblotting, Flüssig-Flüssig-Phasenextraktion, Fest-Flüssigphasenextraktion und Kombinationen davon.

14. Verfahren nach einem der Ansprüche 9 bis 13, wobei mindestens eine Puffersäure des Trennmediums Essigsäure ist; oder
wobei mindestens eine Pufferbase des Trennmediums TRIS ist; oder
wobei das Trennmedium ein binäres Puffersystem aus Essigsäure und TRIS umfasst; vorzugsweise
wobei die Konzentrationen von Essigsäure und TRIS individuell aus 1 mM bis etwa 200 mM, vorzugsweise von etwa 2 mM bis etwa 100 mM, und am stärksten bevorzugt von etwa 5 bis etwa 50 mM gewählt werden.

15. Verfahren nach einem der Ansprüche 1 bis 14, wobei die durch den FFE-Schritt zu trennenden und durch die nachgeschaltete Analyse zu analysierenden Analyten Biopartikel, Biopolymere oder Biomoleküle sind; vorzugsweise
wobei die zu trennenden und zu analysierenden Biopartikel, Biopolymere oder Biomoleküle aus der Gruppe ausgewählt sind bestehend aus Proteinen, Proteinaggregaten, Peptiden, Hormonen, DNA-Proteinkomplexen wie Chromatin, Antikörpern, Zellen, Zellorganellen, Viren oder Viruspartikeln, Membranen, Membranfragmenten, Lipiden, Sacchariden, Polysacchariden, Liposomen, Nanopartikeln und Gemischen davon.

16. Verfahren nach einem der Ansprüche 1 bis 15, wobei die Trennung der Analyten durch isoelektrisches Freifluss-Fokussieren (FF-IEF), Freifluss-Isotachophorese (FF-ITP) oder Freifluss-Zonenelektrophorese (Ff-ZE) durchgeführt wird.

## Revendications

1. Procédé pour analyser des analytes comprenant
a) une séparation d'analytes par l'électrophorèse à écoulement libre (EEL) comprenant un milieu de séparation aqueux pour séparer des analytes par l'électrophorèse à écoulement libre comprenant au moins un tampon acide et au moins un tampon basique, dans lequel chacun des acides de tampon et des bases de tampon est volatile sous des conditions de travail pour spectroscopie de masse,
en cas échéant dans lequel le milieu de séparation est fourni sous forme d'un kit ; et
b) une analyse suivante en aval d'au moins un analyte d'intérêt obtenu de ladite étape a) EEL de séparation
**caractérisé par le fait que**
ladite analyse en aval est une analyse de spectroscopie de masse sélectionnée parmi le groupe consistant en la ionisation par électrospray (ESI), la désorption/ionisation de surface par impact laser améliorée (SELDI), la désorption/ionisation laser assistée par matrice (MALDI ou MALDI-TOF-MS(/MS)) et LC-MS(/MS).

2. Procédé selon la revendication 1 dans lequel le milieu est un milieu binaire ne comprenant qu'un tampon acide et un tampon basique ; et en cas échéant,
dans lequel ledit au moins un acide tampon est sélectionné parmi le groupe consistant en l'acide formique, l'acide acétique, l'acide picolinique, le diacétylacétone, les o-, m- et p-crésols, les o-, m-, p-chorophénols, les hydroxy-pyridines, les alcools fluorinés et les composés carbonyliques tel que le trifluoroéthanol, le tétrafluoropropanol, le tétrafluoroacétone, et/ou
dans lequel ledit au moins un tampon basique est sélectionné parmi le groupe consistant en le TRIS, les hydroxy-pyridines, l'amide d'acide isonicotinique, les carbinols de pyridine, la diéthanolamine, la benzylamine, le pyridinéthanol, et le diméthylaminopropionitrile.

3. Procédé selon la revendication 1 ou la revendication 2, dans lequel le milieu de séparation est sensiblement dépourvu de HPMC, urée, glycérol et/ou PEGs.

4. Procédé selon l'une des revendications 1 à 3, dans lequel la séparation des analytes par l'électrophorèse à écoulement libre (EEL) est mise en oeuvre sous des conditions natives.

5. Procédé selon l'une des revendications 1 à 4, dans lequel au moins un milieu de séparation et/ou un échantillon comprend au moins un agent tensioactif MS-compatible zwitterionique ou non-ionique ; préférablement
dans lequel ledit au moins un agent tensioactif MS-compatible zwitterionique ou non-ionique est un agent tensioactif clivable.

6. Procédé selon la revendication 5, dans lequel au moins un agent tensioactif MS-compatible zwitterionique ou non-ionique est un agent tensioactif clivable et dans lequel un milieu contre-courant qui comprend un agent clivable se met en contact avec et/ou est mélangé avec une fraction qui comprend un agent tensioactif clivable et au moins une partie d'un échantillon après la séparation par électrophorèse ; ou
dans lequel un milieu contre-courant est utilisé pour stabiliser un agent tensioactif clivable contenu dans au moins une fraction après la séparation par l'électrophorèse à écoulement libre,
et, en cas échéant, dans lequel une part d'un agent tensioactif clivable clivé est enlevé par filtration, centrifugation ou évaporation.

7. Procédé selon l'une des revendications 1 à 6, dans lequel le procédé comprend les étapes consistant à :
former, entre les électrodes d'un appareil adapté à l'électrophorèse à écoulement libre, une zone de séparation qui comprend une zone A formée par au moins un milieu de tampon de séparation (MTS) de type A, dans lequel ledit MTS de type A est un milieu de séparation volatile tel que défini selon l'une des revendications 1 à 6, et une zone B formée par au moins un milieu de tampon de séparation de type B, dans lequel le système tampon est un système tampon non-volatile, entre l'anode et la cathode ;
dans lequel ladite zone A est positionnée dans la zone de séparation d'une manière que au moins un analyte d'intérêt peut être élué de la zone de séparation dans ladite zone A ;
séparer des analytes dans un échantillon introduit dans ledit appareil adapté à l'électrophorèse à écoulement libre ; et
éluer au moins un analyte d'intérêt de la zone de séparation dans un MTS de type A.

8. Procédé selon la revendication 7, dans lequel l'échantillon est introduit dans ledit appareil dans une zone A ou dans une zone B ; et dans lequel tous les analytes d'intérêt sont élués de la zone de séparation dans un MTS de type A ;
en cas échéant, dans lequel ledit MTS de type A comprend au moins un agent tensioactif MS-compatible zwitterionique ou non-ionique et dans lequel au moins un MTS de type B comprend un système tampon sélectionné parmi des ampholytes commerciaux, un système acide de tampon/base de tampon binaire (milieu A/B) ou un système tampon de paires multiples complémentaire (CMPBS).

9. Procédé selon l'une des revendications 1 à 8, dans lequel ledit procédé comprend les étapes consistant à
a) séparer des analytes dans un échantillon introduits dans un appareil adapté à l'électrophorèse à écoulement libre ;
b) éluer l'analyte (les analytes) obtenus de l'étape de séparation EEL vers une multiplicité de fractions ;
c) recueillir au moins une fraction contenant l'analyte (les analytes) à analyser ; et
d) soumettre au moins l'une des fractions à ladite analyse en aval dans lequel ladite fraction n'a pas besoin d'une étape d'épuration ou de purification avant ladite analyse en aval.

10. Procédé selon la revendication 9, dans lequel ladite analyse est la spectrométrie de masse à désorption/ionisation laser assistée par matrice (MALDI), et
i) dans lequel un composant de matrice pour l'analyse MALDI est additionné à la solution de tampon à analyte recueilli avant l'analyse de spectrométrie de masse ; ou
ii) dans lequel le milieu de séparation utilisé dans l'étape de séparation EEL comprend au moins un composé de tampon qui peut agir en tant que matrice pour l'analyse MALDI et dans lequel des composés de tampon additionnels sont volatiles sous des conditions de travail pour spectroscopie de masse MALDI ; ou
iii) dans lequel un composant de matrice pour l'analyse MALDI est additionné à la solution de tampon d'analyte recueillie avant l'analyse de spectrométrie de masse et dans lequel le milieu de séparation utilisé dans l'étape de séparation EEL comprend au moins un composé de tampon qui peut agir en tant que matrice pour l'analyse MALDI et dans lequel des composés de tampon additionnels sont volatiles sous des conditions de travail pour spectroscopie de masse MALDI.

11. Procédé selon la revendication 9 ou la revendication 10, comprenant en outre l'étape d'addition à au moins une fraction de l'étape de séparation EEL un agent pour réduire le poids moléculaire des analytes à analyser par l'analyse en aval ; préférablement dans lequel l'analyte (les analytes) est (sont) principalement une protéine (des protéines) ou un peptide (des peptides), et dans lequel l'agent pour réduire le poids moléculaire de l'analyte (des analytes) est une protéase ou un mélange de protéases ; ou
dans lequel l'analyte (les analytes) est (sont) un (des) nucléotide(s), et dans lequel l'agent pour réduire le poids moléculaire de l'analyte (des analytes) est une nucléase ou un mélange de nucléases.

12. Procédé selon l'une des revendications 9 à 12, comprenant en outre l'étape consistant à enlever au moins une partie du solvant et des composés de tampon volatiles avant ladite analyse en aval ; préférablement
dans lequel l'enlèvement est accompli par centrifugation sous vide ou par lyophilisation.

13. Procédé selon l'une des revendications 9 à 12, dans lequel ledit procédé est mis en oeuvre sans aucune étape de purification pour enlever des agents tensioactifs ou des parts d'agents tensioactifs clivable clivés sélectionnés parmi le groupe consistant en la dialyse, la chromatographie, la chromatographie en phase inverse, la chromatographie d'échange ionique, l'échange d'agent tensioactif, la précipitation des protéines, la chromatographie de l'affinité, l'electroblotting, extraction en phase liquide-liquide, l'extraction en phase solide-liquide et des combinaisons de ceux-ci.

14. Procédé selon l'une des revendications 9 à 13, dans lequel au moins un acide tampon du milieu de séparation est l'acide acétique ; ou
dans lequel au moins une base tampon du milieu de séparation est le TRIS ; ou
dans lequel le milieu de séparation comprend un système tampon binaire d'acide acétique et de TRIS ; préférablement
dans lequel les concentrations d'acide acétique et de TRIS sont sélectionnées individuellement d'environ 1 mM à environ 200 mM, préférablement d'environ 2 mM à environ 100 mM, et encore préférablement d'environ 5 à environ 50 mM.

15. Procédé selon l'une des revendications 1 à 14, dans lequel les analytes à séparer par l'étape EEL et analyser par ladite analyse en aval sont des bioparticules, des biopolymères ou des biomolécules ; préférablement
dans lequel les bioparticules, les biopolymères ou les biomolécules à séparer et analyser sont sélectionnés parmi le groupe consistant en les protéines, les agrégats de protéines, les peptides, les hormones, les complexes d'ADN-protéine tel que le chromatine, l'ADN, les anticorps, les cellules, les organelles cellulaires, les virus ou les particules virales, les membranes, les fragments membranaires, les lipides, les saccharides, les polysaccharides, les liposomes, les nanoparticules et les mélanges de ceux-ci.

16. Procédé selon l'une des revendications 1 à 15, dans lequel la séparation des analytes est accomplie par la focalisation isoélectrique à écoulement libre (FF-IEF), l'isotachophorèse à écoulement libre (FF-ITP) ou l'électrophorèse de zone d'écoulement libre (FF-ZE).
